# EUROPEAN PATENT APPLICATION

(11) **EP 4 648 444 A1**
(43) Date of publication of application: **12.11.2025**
(21) Application number: 24738538.8
(22) Date of filing: 04.01.2024
(51) Int. Cl.: H04W 4/02

(54) **REQUEST METHOD BASED ON ON-DEMAND PRS, AND DEVICE**

(30) Priority: 05.01.2023 CN 202310014676
(71) Applicant: Vivo Mobile Communication Co., Ltd., Dongguan, Guangdong 523863 (CN)
(72) Inventor: WANG, Yuanyuan, Dongguan, Guangdong 523863 (CN); SI, Ye, Dongguan, Guangdong 523863 (CN); LIU, Shixiao, Dongguan, Guangdong 523863 (CN); WU, Huaming, Dongguan, Guangdong 523863 (CN)
(74) Representative: Shieldmark
(86) International application number: PCT/CN2024/070642
(87) International publication number: WO 2024/146606

(57) **Abstract**

This application discloses an on-demand PRS-based request method and a device, pertaining to the field of communication technologies. The on-demand PRS-based request method in embodiments of this application includes: sending, by a terminal, a first on-demand PRS request across multiple positioning frequency layers; where the first on-demand PRS request is used to request, from a first network-side device, one or more target on-demand PRSs satisfying a condition for aggregation; and the satisfying a condition for aggregation includes at least one of the following: at least one of a time-domain position, a subcarrier spacing SCS, a comb size, a CP type, and a reference point A for the target on-demand PRSs transmitted across the multiple positioning frequency layers; and the target on-demand PRSs transmitted across the multiple positioning frequency layers include a same transmission and reception point TRP and/or a same number of TRPs.

## Description

### CROSS-REFERENCE TO RELATED APPLICATIONS

This application claims priority to Chinese Patent Application No. 202310014676.5, filed in China on January 5, 2023, which is incorporated herein by reference in its entirety.

### TECHNICAL FIELD

This application pertains to the field of communication technologies, and specifically, relates to an on-demand PRS-based request method and a device.

### BACKGROUND

In the wireless communication system, a positioning reference signal (Positioning Reference Signal, PRS) is a type of reference signal that assists in the positioning of terminals.

Initially, PRS configuration information is determined by a base station (gNB) or during network installation, and dynamic configuration based on positioning requirements and changes is not supported. In scenarios where there is no demand for positioning, such as in sparsely populated areas or late at night, a positioning reference signal may still be transmitted. However, in scenarios where there is an urgent or low- latency requirement, it might not be possible to transmit the positioning reference signal promptly, requiring waiting until a specific transmission cycle to perform measurement and calculation. This can lead to wasted positioning resources or failure to report measurement results in a timely manner. In Release 17, research and standardization work for on-demand (on demand) PRS was conducted. However, the PRS is requested per frequency layer (per frequency layer), which cannot meet specific bandwidth or precision requirements for positioning. Therefore, a key issue that needs to be addressed is how to better implement an on-demand PRS request scheme to improve positioning performance.

### SUMMARY

Embodiments of this application provide an on-demand PRS-based request method and a device, so as to improve positioning performance.

According to a first aspect, an on-demand PRS-based request method is provided, including:
sending, by a terminal, a first on-demand PRS request across multiple positioning frequency layers; where the first on-demand PRS request is used to request, from a first network-side device, one or more target on-demand PRSs satisfying a condition for aggregation; and
the satisfying a condition for aggregation includes at least one of the following:
   the target on-demand PRSs transmitted across the multiple positioning frequency layers have a same time-domain position;
   the target on-demand PRSs transmitted across the multiple positioning frequency layers have a same subcarrier spacing (sub-carrier space, SCS);
   the target on-demand PRSs transmitted across the multiple positioning frequency layers have a same comb size;
   the target on-demand PRSs transmitted across the multiple positioning frequency layers use a same cyclic prefix (Cyclic Prefix, CP) type;
   the target on-demand PRSs transmitted across the multiple positioning frequency layers use a same reference point A; and
   the target on-demand PRSs transmitted across the multiple positioning frequency layers include a same transmission and reception point (Transmission/Reception Point, TRP) and/or a same number of TRPs.

According to a second aspect, an on-demand PRS-based request method is provided, including:
sending, by a network-side device, a second on-demand PRS request across multiple positioning frequency layers; where the second on-demand PRS request is used to request, from a second network-side device, one or more target on-demand PRSs satisfying a condition for aggregation; and
the satisfying a condition for aggregation includes at least one of the following:
   the target on-demand PRSs transmitted across the multiple positioning frequency layers have a same time-domain position;
   the target on-demand PRSs transmitted across the multiple positioning frequency layers have a same subcarrier spacing SCS;
   the target on-demand PRSs transmitted across the multiple positioning frequency layers have a same comb size;
   the target on-demand PRSs transmitted across the multiple positioning frequency layers use a same cyclic prefix CP type;
   the target on-demand PRSs transmitted across the multiple positioning frequency layers use a same reference point A; and
   the target on-demand PRSs transmitted across the multiple positioning frequency layers include a same transmission and reception point TRP and/or a same number of TRPs.

According to a third aspect, an on-demand PRS-based request method is provided, including:
receiving, by a second network-side device, a second on-demand PRS request sent by a first network-side device across multiple positioning frequency layers; where the second on-demand PRS request is used to request, from a second network-side device, one or more target on-demand PRSs satisfying a condition for aggregation; and
the satisfying a condition for aggregation includes at least one of the following:
   the target on-demand PRSs transmitted across the multiple positioning frequency layers have a same time-domain position;
   the target on-demand PRSs transmitted across the multiple positioning frequency layers have a same subcarrier spacing SCS;
   the target on-demand PRSs transmitted across the multiple positioning frequency layers have a same comb size;
   the target on-demand PRSs transmitted across the multiple positioning frequency layers use a same cyclic prefix CP type;
   the target on-demand PRSs transmitted across the multiple positioning frequency layers use a same reference point A; and
   the target on-demand PRSs transmitted across the multiple positioning frequency layers include a same transmission and reception point TRP and/or a same number of TRPs.

According to a fourth aspect, an on-demand PRS-based request apparatus is provided, including:
a sending module, configured to send a first on-demand PRS request across multiple positioning frequency layers; where the first on-demand PRS request is used to request, from a network-side device, one or more target on-demand PRSs satisfying a condition for aggregation; and
the satisfying a condition for aggregation includes at least one of the following:
   the target on-demand PRSs transmitted across the multiple positioning frequency layers have a same time-domain position;
   the target on-demand PRSs transmitted across the multiple positioning frequency layers have a same subcarrier spacing SCS;
   the target on-demand PRSs transmitted across the multiple positioning frequency layers have a same comb size;
   the target on-demand PRSs transmitted across the multiple positioning frequency layers use a same cyclic prefix CP type;
   the target on-demand PRSs transmitted across the multiple positioning frequency layers use a same reference point A; and
   the target on-demand PRSs transmitted across the multiple positioning frequency layers include a same transmission and reception point TRP and/or a same number of TRPs.

According to a fifth aspect, an on-demand PRS-based request apparatus is provided, including:
a sending module, configured to send a second on-demand PRS request across multiple positioning frequency layers; where the second on-demand PRS request is used to request, from a second network-side device, one or more target on-demand PRSs satisfying a condition for aggregation; and
the satisfying a condition for aggregation includes at least one of the following:
   the target on-demand PRSs transmitted across the multiple positioning frequency layers have a same time-domain position;
   the target on-demand PRSs transmitted across the multiple positioning frequency layers have a same subcarrier spacing SCS;
   the target on-demand PRSs transmitted across the multiple positioning frequency layers have a same comb size;
   the target on-demand PRSs transmitted across the multiple positioning frequency layers use a same cyclic prefix CP type;
   the target on-demand PRSs transmitted across the multiple positioning frequency layers use a same reference point A; and
   the target on-demand PRSs transmitted across the multiple positioning frequency layers include a same transmission and reception point TRP and/or a same number of TRPs.

According to a sixth aspect, an on-demand PRS-based request apparatus is provided, including:
a receiving module, configured to receive a second on-demand PRS request sent by a first network-side device across multiple positioning frequency layers; where the second on-demand PRS request is used to request, from a second network-side device, one or more target on-demand PRSs satisfying a condition for aggregation; and
the satisfying a condition for aggregation includes at least one of the following:
   the target on-demand PRSs transmitted across the multiple positioning frequency layers have a same time-domain position;
   the target on-demand PRSs transmitted across the multiple positioning frequency layers have a same subcarrier spacing SCS;
   the target on-demand PRSs transmitted across the multiple positioning frequency layers have a same comb size;
   the target on-demand PRSs transmitted across the multiple positioning frequency layers use a same cyclic prefix CP type;
   the target on-demand PRSs transmitted across the multiple positioning frequency layers use a same reference point A; and
   the target on-demand PRSs transmitted across the multiple positioning frequency layers include a same transmission and reception point TRP and/or a same number of TRPs.

According to a seventh aspect, a terminal is provided, where the terminal includes a processor and a memory, where a program or instructions capable of running on the processor are stored in the memory. When the program or the instructions are executed by the processor, the steps of the method according to the first aspect are implemented.

According to an eighth aspect, a terminal is provided, including a processor and a communication interface, where the communication interface is configured to send a first on-demand PRS request across multiple positioning frequency layers; where the first on-demand PRS request is used to request, from a first network-side device, one or more target on-demand PRSs satisfying a condition for aggregation; and
the satisfying a condition for aggregation includes at least one of the following:
the target on-demand PRSs transmitted across the multiple positioning frequency layers have a same time-domain position;
the target on-demand PRSs transmitted across the multiple positioning frequency layers have a same subcarrier spacing SCS;
the target on-demand PRSs transmitted across the multiple positioning frequency layers have a same comb size;
the target on-demand PRSs transmitted across the multiple positioning frequency layers use a same cyclic prefix CP type;
the target on-demand PRSs transmitted across the multiple positioning frequency layers use a same reference point A; and
the target on-demand PRSs transmitted across the multiple positioning frequency layers include a same transmission and reception point TRP and/or a same number of TRPs.

According to a ninth aspect, a first network-side device is provided, where the first network-side device includes a processor and a memory, where a program or instructions capable of running on the processor are stored in the memory. When the program or the instructions are executed by the processor, the steps of the method according to the second aspect are implemented.

According to a tenth aspect, a first network-side device is provided, including a processor and a communication interface, where the communication interface is configured to send a second on-demand PRS request across multiple positioning frequency layers; where the second on-demand PRS request is used to request, from a second network-side device, one or more target on-demand PRSs satisfying a condition for aggregation; and
the satisfying a condition for aggregation includes at least one of the following:
the target on-demand PRSs transmitted across the multiple positioning frequency layers have a same time-domain position;
the target on-demand PRSs transmitted across the multiple positioning frequency layers have a same subcarrier spacing SCS;
the target on-demand PRSs transmitted across the multiple positioning frequency layers have a same comb size;
the target on-demand PRSs transmitted across the multiple positioning frequency layers use a same cyclic prefix CP type;
the target on-demand PRSs transmitted across the multiple positioning frequency layers use a same reference point A; and
the target on-demand PRSs transmitted across the multiple positioning frequency layers include a same transmission and reception point TRP and/or a same number of TRPs.

According to an eleventh aspect, a second network-side device is provided, where the second network-side device includes a processor and a memory, where a program or instructions capable of running on the processor are stored in the memory. When the program or the instructions are executed by the processor, the steps of the method according to the third aspect are implemented.

According to a twelfth aspect, a second network-side device is provided, including a processor and a communication interface, where the communication interface is configured to receive a second on-demand PRS request sent by a first network-side device across multiple positioning frequency layers; where the second on-demand PRS request is used to request, from a second network-side device, one or more target on-demand PRSs satisfying a condition for aggregation; and
the satisfying a condition for aggregation includes at least one of the following:
the target on-demand PRSs transmitted across the multiple positioning frequency layers have a same time-domain position;
the target on-demand PRSs transmitted across the multiple positioning frequency layers have a same subcarrier spacing SCS;
the target on-demand PRSs transmitted across the multiple positioning frequency layers have a same comb size;
the target on-demand PRSs transmitted across the multiple positioning frequency layers use a same cyclic prefix CP type;
the target on-demand PRSs transmitted across the multiple positioning frequency layers use a same reference point A; and
the target on-demand PRSs transmitted across the multiple positioning frequency layers include a same transmission and reception point TRP and/or a same number of TRPs.

According to a thirteenth aspect, a communication system is provided, including a terminal, a first network-side device, and a second network-side device, where the terminal can be configured to execute the steps of the on-demand PRS-based request method according to the first aspect, the first network-side device can be configured to execute the steps of the on-demand PRS-based request method according to the second aspect, and the second network-side device can be configured to execute the on-demand PRS-based request method according to the third aspect.

According to a fourteenth aspect, a readable storage medium is provided, where the readable storage medium stores a program or instructions, and when the program or instructions are executed by the processor, the steps of the method according to the first aspect are implemented, or the steps of the method according to the second aspect are implemented, or the steps of the method according to the third aspect are implemented.

According to a fifteenth aspect, a chip is provided, where the chip includes a processor and a communication interface, the communication interface is coupled to the processor, and the processor is configured to run a program or instructions to implement the method according to the first aspect, or the method according to the second aspect, or the method according to the third aspect.

According to a sixteenth aspect, a computer program/program product is provided, where the computer program/program product is stored in a storage medium, and the computer program/program product is executed by at least one processor to implement the steps of the on-demand PRS-based request method according to the first aspect, or the steps of the on-demand PRS-based request method according to the second aspect, or the steps of the on-demand PRS-based request method according to the third aspect.

In the embodiments of this application, the terminal sends a first on-demand PRS request across multiple positioning frequency layers; the first on-demand PRS request is used to request, from the first network-side device, one or more target on-demand PRSs satisfying a condition for aggregation. The satisfying a condition for aggregation includes at least one of the following: the target on-demand PRSs transmitted across the multiple positioning frequency layers have a same time-domain position; the target on-demand PRSs transmitted across the multiple positioning frequency layers have a same subcarrier spacing SCS; the target on-demand PRSs transmitted across the multiple positioning frequency layers have a same comb size; the target on-demand PRSs transmitted across the multiple positioning frequency layers use a same cyclic prefix CP type; the target on-demand PRSs transmitted across the multiple positioning frequency layers use a same reference point A; and the target on-demand PRSs transmitted across the multiple positioning frequency layers include a same transmission and reception point TRP and/or a same number of TRPs. By aggregating one or more target on-demand PRSs on the multiple positioning frequency layers that satisfy the condition for aggregation, aggregation gains such as increasing a bandwidth can be obtained, thereby improving positioning accuracy.

### BRIEF DESCRIPTION OF DRAWINGS

FIG. 1 is a structural diagram of a wireless communication system to which embodiments of this application are applicable;
FIG. 2 is a first flowchart of an on-demand PRS-based request method according to an embodiment of this application;
FIG. 3 is a flowchart of interaction for an on-demand PRS-based request method according to an embodiment of this application;
FIG. 4 is a second flowchart of an on-demand PRS-based request method according to an embodiment of this application;
FIG. 5 is a third flowchart of an on-demand PRS-based request method according to an embodiment of this application;
FIG. 6 is a first schematic structural diagram of an on-demand PRS-based request apparatus according to an embodiment of this application;
FIG. 7 is a second schematic structural diagram of an on-demand PRS-based request apparatus according to an embodiment of this application;
FIG. 8 is a third schematic structural diagram of an on-demand PRS-based request apparatus according to an embodiment of this application;
FIG. 9 is a schematic structural diagram of a communication device according to an embodiment of this application;
FIG. 10 is a schematic structural diagram of a terminal according to an embodiment of this application;
FIG. 11 is a first schematic structural diagram of a network-side device according to an embodiment of this application; and
FIG. 12 is a second schematic structural diagram of a network-side device according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. Based on the embodiments in this application, all other embodiments obtained by ordinary people in this field belong to the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or multiple first objects. In addition, "and/or" in the specification and claims represents at least one of connected objects, and the character "/" generally indicates that the associated objects have an "or" relationship. The term "indication" in the specification and claims of this application can be either an explicit indication or an implicit indication. The explicit indication may be understood as: a sender explicitly notifies, in an sent indication, a receiver of an operation or a request result that needs to be performed; and the implicit indication may be understood as: the receiver performs determining according to the indication sent by the sender, and determines, according to a determining result, an operation or a request result that needs to be performed.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other systems than an NR system, for example, the 6th generation (6^{th} Generation, 6G) communication system.

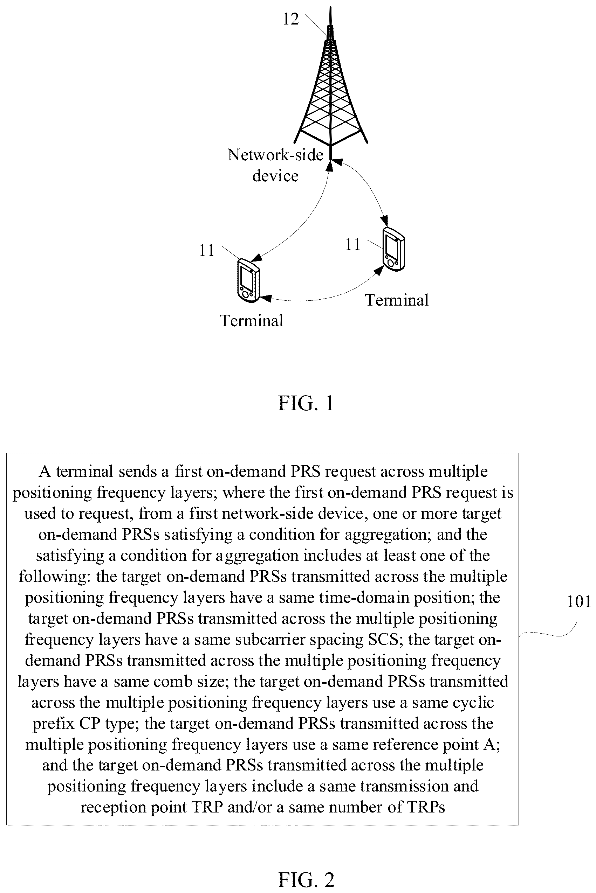

FIG. 1 is a block diagram of a wireless communication system to which the embodiments of this application are applicable. The wireless communication system includes a terminal 11 and a network-side device 12. The terminal 11 may be a terminal-side device such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. In addition to the foregoing terminal device, it may alternatively be a chip in a terminal, such as a modem (Modem) chip or a system on chip (System on Chip, SoC). It should be noted that a specific type of the terminal 11 is not limited in the embodiments of this application. The network-side device 12 may include an access network device or a core network device, where the access network device 12 may also be referred to as a radio access network device, a radio access network (Radio Access Network, RAN), a radio access network function, or a radio access network unit. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmission/Reception Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application service discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application Function (Application Function, AF), a location server, a location management function (Location Management Function, LMF), an evolved serving mobile location center (Evolved Serving Mobile Location Center, E-SMLC), and the like. It should be noted that, in the embodiments of this application, a core network device in an NR system is used as an example for description, and a specific type of the core network device is not limited. Due to an insufficient bandwidth of a single carrier, where typically the maximum bandwidth of a single carrier is 100 MHz, and many carriers are even 20 MHz or 40 MHz, whereas ultra wideband (Ultra Wideband, UWB) can have a bandwidth of 400 MHz. Single-carrier PRSs may not achieve sufficient positioning accuracy. Performance gains for multi-carrier signals can only be achieved under specific conditions. Therefore, the embodiments of this application studies how to request and configure multi-carrier PRSs to meet precision requirements.

On-demand PRS is a new feature introduced in Release 17, where appropriate PRS is configured based on a request from a location management function (Location Management Function, LMF) or a terminal, aiming to improve network utilization and positioning performance. However, in Release 17, a PRS is requested per frequency layer, meaning per single-carrier request, which cannot meet some positioning bandwidth or accuracy requirements.

In the embodiments of this application, one or more target on-demand PRSs satisfying a condition for aggregation are requested across multiple positioning frequency layers, and positioning is performed based on one or more target on-demand PRSs.

Optionally, one target on-demand PRS is configured to transmit across multiple positioning frequency layers. In another possible embodiment, multiple target on-demand PRSs are configured to transmit across multiple positioning frequency layers, and the multiple target on-demand PRSs satisfy a specific condition for aggregation.

The following specifically describes the on-demand PRS-based request method provided in the embodiments of this application through specific embodiments and application scenarios thereof with reference to the accompanying drawings.

FIG. 2 is a first flowchart of an on-demand PRS-based request method according to an embodiment of this application. As shown in FIG. 2, the method provided in this embodiment includes:
Step 101: A terminal sends a first on-demand PRS request across multiple positioning frequency layers; where the first on-demand PRS request is used to request, from a first network-side device, one or more target on-demand PRSs satisfying a condition for aggregation; and
the satisfying a condition for aggregation includes at least one of the following:
the target on-demand PRSs transmitted across the multiple positioning frequency layers have a same time-domain position;
the target on-demand PRSs transmitted across the multiple positioning frequency layers have a same subcarrier spacing (sub-carrier space, SCS);
the target on-demand PRSs transmitted across the multiple positioning frequency layers have a same comb size;
the target on-demand PRSs transmitted across the multiple positioning frequency layers use a same cyclic prefix (Cyclic Prefix, CP) type;
the target on-demand PRSs transmitted across the multiple positioning frequency layers use a same reference point A (point A); and
the target on-demand PRSs transmitted across the multiple positioning frequency layers include a same transmission and reception point (Transmission/Reception Point, TRP) and/or a same number of TRPs.

Specifically, multiple positioning frequency layers can be understood as multiple cells, multiple frequency layers or multiple carriers (carrier). Multiple positioning frequency layers may be associated with one on-demand PRS, or one positioning frequency layer may be associated with one on-demand PRS. To improve positioning accuracy, one or more target on-demand PRSs satisfying the condition for aggregation can be requested from the first network-side device (such as the LMF). For example, the target on-demand PRS may have a same time-domain position, a same SCS, a same comb size, a same CP type, and a same reference point A across multiple positioning frequency layers. In addition, the target on-demand PRS may include a same transmission and reception point TRP across multiple positioning frequency layers (that is, multiple positioning frequency layers associated with the one or more target on-demand PRSs).

Optionally, PRS frequency domain positions, PRS sequence generation, and mapping for different positioning frequency layers can refer to a same point A. That is, in an embodiment, one or more target on-demand PRSs are a continuous sequence on the multiple positioning frequency layers.

Optionally, the reference point A of the target on-demand PRSs transmitted across the multiple positioning frequency layers is a reference point A of a positioning frequency layer with a lowest frequency on the multiple positioning frequency layers; or a reference point A of a positioning frequency layer with a smallest ID on the multiple positioning frequency layers; or a reference point A of a specified positioning frequency layer on the multiple positioning frequency layers. The ID may be a sequence number. Optionally, the first network-side device may send a request to the second network-side device to request one or more target on-demand PRSs satisfying the condition for aggregation, and the second network-side device (such as a base station/TRP) sends the target on-demand PRS across multiple positioning frequency layers separately based on the on-demand PRS request. Further, the terminal can perform measurement on the target on-demand PRS, and then performs positioning based on the measurement result. In an optional embodiment, the on-demand PRS request received by the second network-side device may come from the first network-side device or the terminal.

Optionally, the first network-side device may first receive a request of the terminal and then send the request to the second network-side device. The request sent by the first network-side device may be determined based on the request of the terminal, and the two requests may be the same or different.

Optionally, the multiple positioning frequency layers may be two or more positioning frequency layers, and the number of specific positioning frequency layers is not limited in this application, for example, may be 2, 3, or 4.

In the method in this embodiment, the terminal sends a first on-demand PRS request across multiple positioning frequency layers; the first on-demand PRS request is used to request, from the first network-side device, one or more target on-demand PRSs satisfying a condition for aggregation. The satisfying a condition for aggregation includes at least one of the following: the target on-demand PRSs transmitted across the multiple positioning frequency layers have a same time-domain position; the target on-demand PRSs transmitted across the multiple positioning frequency layers have a same subcarrier spacing SCS; the target on-demand PRSs transmitted across the multiple positioning frequency layers have a same comb size; the target on-demand PRSs transmitted across the multiple positioning frequency layers use a same cyclic prefix CP type; the target on-demand PRSs transmitted across the multiple positioning frequency layers use a same reference point A; and the target on-demand PRSs transmitted across the multiple positioning frequency layers include a same transmission and reception point TRP and/or a same number of TRPs. By aggregating one or more target on-demand PRSs on the multiple positioning frequency layers that satisfy the condition for aggregation, aggregation gains such as increasing a bandwidth can be obtained, thereby improving positioning accuracy.

Optionally, a same TRP contained in each positioning frequency layer has a same TRP ID. The TRP ID at least includes one of the following: a downlink PRS ID (DL PRS ID), a PCI, and an NCGI.

Optionally, the multiple positioning frequency layers include a same TRP, which can be understood as the same TRP sending multiple PRS resources on different positioning frequency layers. (Further a same reference PRS resource or reference PRS resource set may be included).

Optionally, the same TRP sends multiple PRS resources on different positioning frequency layers, and the multiple PRS resources can be sent simultaneously.

Optionally, the multiple PRS resources sent by the same TRP on different positioning frequency layers belong to different PRS resource sets. That is, the same TRP sends different PRS resource sets on different positioning frequency layers.

Optionally, the same TRP included in the multiple positioning frequency layers has a same TRP specific parameter in a TRP configuration, and the TRP specific parameter at least includes one of the following: PRS search window information corresponding to the TRP (such as expected (expected) reference signal time difference (Reference Signal Time Difference, RSTD) or expected RSTD uncertainty (expected-RSTD-uncertain)), a system frame number (System Frame Number, SFN) 0 offset, or the like.

Optionally, in a case that the multiple positioning frequency layers include a same TRP, at a same time point (for example, on a same OFDM symbol or slot) and in the same TRP, one or more target on-demand PRS resources located in the multiple positioning frequency layers satisfy one or more of the following:
(1) Being associated with a same spatial transmission filter, or having a same quasi co-location (Quasi Co-Location, QCL) spatial reference signal.
   For example, the multiple PRS resources are emitted from the same spatial transmission filter (same beam), or antenna ports corresponding to the multiple PRS resources are the same.
(2) Having a same value of sequence ID (sequence ID). For example, the dl-PRS-SequenceID parameter is the same.
(3) Having a same value of resource element (Resource Element, RE)-level offset. For example, the dl-PRS-CombSizeN-and-ReOffset parameter is the same.
(4) Having a same value of number of symbols. For example, the dl-PRS-NumSymbols parameter is the same.
(5) Having a same value of symbol offset. For example, the dl-PRS-ResourceSymbolOffset parameter is the same.
(6) Having a same value of slot-level offset. For example, the dl-PRS-ResourceSlotOffset parameter is the same.
(7) Having a same value of transmit power. For example, the dl-PRS-ResourcePower parameter is the same.
(8) A transmit power being determined based on a transmission bandwidth of the positioning frequency layer, that is, the transmit power on different positioning frequency layers may be different.

Optionally, a PRS resource set to which the one or more target on-demand PRS resources each belong satisfies one or more of the following:
(1) having a same value of PRS periodicity; for example, the dl-PRS-Periodicity parameter is the same;
(2) having a same value of PRS resource set slot offset;
(3) having a same value of PRS resource repetition factor; for example, the dl-PRS-ResourceRepetitionFactor parameter is the same;
(4) having a same value of PRS resource repetition interval; for example, the dl-PRS-ResourceTimeGap parameter is the same;
(5) having a same value of PRS muting pattern; for example, at least one of the dl-PRS-MutingOption1 and dl-PRS-MutingOption2 parameters is the same; and
(6) having a same number of PRS resources.

In the foregoing implementation, defining the information that one or more target on-demand PRS resources located in multiple positioning frequency layers meet makes multiple target on-demand PRSs obtain aggregation gains, so as to improve positioning accuracy.

In the above embodiment, optionally, a same target on-demand PRS resource across the multiple positioning frequency layers is defined, and aggregation measurement is performed on the same target on-demand PRS resource of the multiple positioning frequency layers.

In the above embodiment, optionally, multiple target on-demand PRS resources of the multiple positioning frequency layers are defined, aggregation measurement is performed on the multiple target on-demand PRS resources of the multiple positioning frequency layers.

Optionally,
the first on-demand PRS request includes information about a target positioning frequency layer combination, which is used to indicate that the first on-demand PRS request is used for requesting to send the target on-demand PRSs on the target positioning frequency layer combination, and the target positioning frequency layer combination includes multiple positioning frequency layers; or
the first on-demand PRS request includes: aggregation indication information; where the aggregation indication information is used for indicating information about multiple positioning frequency layers expected to be aggregated.

Specifically, the first on-demand PRS request can be implemented in at least one manner: (1) the first on-demand PRS request includes information about a target positioning frequency layer combination, such as an identifier ID of the target positioning frequency layer combination, and frequency domain information, number information, frequency band information, bandwidth information, and the like of multiple positioning frequency layers included; (2) the first on-demand PRS request includes aggregation indication information; where the aggregation indication information is used to indicate information about multiple positioning frequency layers expected to be aggregated, that is, the information about multiple positioning frequency layers satisfying the condition for aggregation, such as identification information of the multiple positioning frequency layers satisfying the condition for aggregation, such as an identifier ID or frequency band information.

The information about the target positioning frequency layer combination includes the following parameters, for example:
nr-DL-PRS-PositioningFrequencyLayerGroup-r18 (a combination ID of the positioning frequency layer combination); and
INTEGER(1..max**PositioningFrequencyLayerGroup-**1), which means including configuration information of the positioning frequency layer combination, and including the combination ID.

Optionally, the aggregation indication information includes at least one of the following:
first indication information, where the first indication information is used to indicate that a target on-demand PRS satisfying the condition for aggregation is expected to be received;
identifiers IDs of the multiple positioning frequency layers;
frequency domain information of the multiple positioning frequency layers;
number information of the multiple positioning frequency layers;
aggregation bandwidth information of the multiple positioning frequency layers; and
frequency band information to which the multiple positioning frequency layers belong.

In an optional embodiment, one positioning frequency layer corresponds to one carrier or cell. Optionally, a mapping relationship between positioning frequency layers and carrier/cells can be determined based on one or more of a physical cell identifier (Physical Cell Identifier, PCI), a reference point A, a band identifier (Band ID), and an NR cell global identifier (NR Cell Global Identifier, NCGI).

The frequency domain information includes, for example, at least one of an NCGI, a PCI, an absolute radio frequency channel number (Absolute Radio Frequency Channel Number, ARFCN), and a point A.

The frequency domain information includes, for example, at least one of offset frequency information relative to the point A, a comb (Comb), and an RE offset value.

The aggregation bandwidth information of the multiple positioning frequency layers is, for example, an aggregated total bandwidth of the multiple positioning frequency layers, or a bandwidth of each positioning frequency layer.

The frequency band information includes, for example, a Band ID and a point A.

In the foregoing implementation, the first on-demand PRS request is sent for the positioning frequency layer combination, and/or the first on-demand PRS request includes: aggregation indication information. The aggregation indication information is used to indicate information about multiple positioning frequency layers expected to be aggregated, so as to request an on-demand PRS on the multiple aggregated positioning frequency layers, and perform aggregation processing to obtain better positioning performance.

Optionally, before or after step 101, the following step may be included:
receiving, by the terminal, configuration information of a positioning frequency layer combination; where the configuration information of the positioning frequency layer combination includes at least one of the following:
identification information of the positioning frequency layer combination;
assistance data of the positioning frequency layer combination; and
assistance data of multiple positioning frequency layers included in the positioning frequency layer combination.

Specifically, the configuration information of the positioning frequency layer combination may be included in positioning assistance data sent by the LMF to the terminal, for example, may be carried in an LTE positioning protocol (LTE Positioning Protocol, LPP) or broadcast message.

Optionally, the identification information of the positioning frequency layer combination is, for example, an identifier ID of the positioning frequency layer or a combination ID.

Optionally, the configuration information of the positioning frequency layer combination may be carried when configuring each (per) positioning frequency layer assistance data (for example, carried by the NR-DL-PRS-AssistanceDataPerFreq-r16 parameter), for example, the per positioning frequency layer assistance data indicates a positioning frequency layer combination to which the positioning frequency layer belongs.

It is assumed that there are up to N positioning frequency layer combinations, such as N=4, each positioning frequency layer belongs to one of combinations 1, 2, 3, and 4.

The positioning frequency layer assistance data includes, for example, identification information for the positioning frequency layer. Optionally, the identification information of the positioning frequency layer includes at least one of the following: an ID of the positioning frequency layer, frequency domain information of the positioning frequency layer, a frequency band ID of the positioning frequency layer, and preference of the positioning frequency layer.

For example, the positioning frequency layer assistance data NR-DL-PRS-PositioningFrequencyLayer-r16 ::= SEQUENCE {

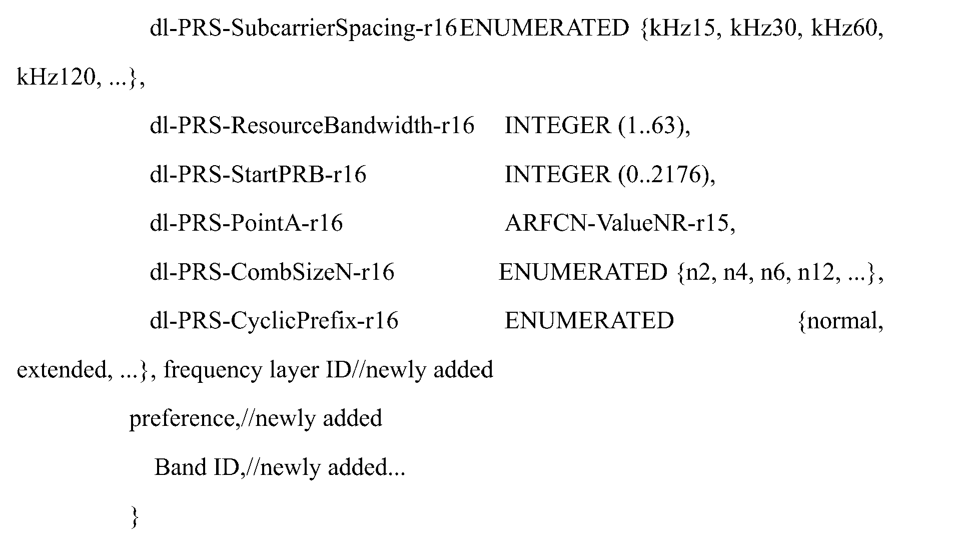

Optionally, the assistance data of the positioning frequency layer combination includes at least one of the following:
(1) Third information related to positioning frequency layers included in the positioning frequency layer combination.

The third information includes at least one of the following: IDs of the multiple positioning frequency layers, frequency domain information of the multiple positioning frequency layers, fourth information of each positioning frequency layer, number information of the multiple positioning frequency layers, frequency band IDs of the multiple positioning frequency layers, and preference of the multiple positioning frequency layers; and
the fourth information includes at least one of the following: a reference point A of each positioning frequency layer, a start physical resource block PRB of each positioning frequency layer, and a bandwidth of each positioning frequency layer.

The positioning frequency layer combination can be represented by one positioning frequency layer list, where the list includes multiple positioning frequency layers.

Optionally, the fourth information for each positioning frequency layer is different, that is, the number of pieces of fourth information matches the number of positioning frequency layers in one positioning frequency layer combination.

Optionally, the points A for the multiple positioning frequency layers may be the same. In such a case, one positioning frequency layer list (or positioning frequency layer combination) merely needs to contain one point A.

Optionally, in one embodiment, each frequency layer point in the multiple positioning frequency layers has a different start physical resource block (StartPRB) or offset frequency information relative to point A, that is, the number of positioning frequency layers in one positioning frequency layer list (or positioning frequency layer combination) needs to match the number of start PRBs. Optionally, a start physical resource block of a positioning frequency layer with a lowest aggregation frequency is Start PRB (or point A+Start PRB), a start physical resource block of a positioning frequency layer with a second lowest aggregation frequency is Start PRB 1 (point A+ Start PRB 1), and so on. In another optional embodiment, it is alternatively determined based on offset frequency information shift relative to point A. For example, a start physical resource block of a positioning frequency layer with a lowest aggregation frequency is Start PRB and shift (or point A+Start PRB+shift), a start physical resource block of a positioning frequency layer with a second lowest aggregation frequency is Start PRB 1 and shift 1 (point A+ Start PRB 1+shift1), and so on. In yet another optional embodiment, it alternatively needs to be determined based on a bandwidth of a previous positioning frequency layer. For example, a start physical resource block of a positioning frequency layer with a lowest aggregation frequency is Start PRB and shift (or point A+Start PRB+BW+shift), a start physical resource block of a positioning frequency layer with a second lowest aggregation frequency is Start PRB 1 and shift 1 (point A+ Start PRB 1+BW1+shift1), and so on.

Optionally, a band ID of the multiple positioning frequency layers is, for example, a band ID corresponding to a positioning frequency layer list, or a band ID corresponding to a positioning frequency layer in the positioning frequency layer list.

Optionally, preference of the multiple positioning frequency layers are, for example, preference information of the positioning frequency layer list, or preference information of a positioning frequency layer in the positioning frequency layer list.

(2) Assistance data for multiple positioning frequency layers, where the assistance data includes at least one of the following: information about reference positioning frequency layers and a common parameter of each positioning frequency layer combination (or positioning frequency layer).

The reference positioning frequency layer is a frequency layer that provides reference fifth information to the multiple positioning frequency layers of the positioning frequency layer combination, and the fifth information includes at least one of the following: identification information of the reference positioning frequency layer, a comb size CombSize, a cyclic prefix CP, a subcarrier spacing and reference point A.

The common parameter includes at least one of a comb size, a CP, a subcarrier spacing, a reference point A, continuous or non-continuous carrier aggregation in a frequency band, radio frequency information, antenna information, timing error group (Timing Error Group, TEG) information, and transmission and reception point TRP information.

Specifically, for the reference positioning frequency layer:

The configuration information may explicitly indicate a reference positioning frequency layer in the positioning frequency layer combination, or the configuration information implicitly indicates that the first positioning frequency layer is a reference positioning frequency layer, or a positioning frequency layer configured in the positioning assistance data is a reference positioning frequency layer, which is used to indicate that the positioning frequency layer combination refers to the configuration of the reference positioning frequency layer. That is, multiple positioning frequency layers of the positioning frequency layer combination refer to the configuration of the reference positioning frequency layer, including one or more of the following:
(1) Multiple positioning frequency layers in the positioning frequency layer combination or the positioning frequency layer list refer to a comb size configuration of the reference positioning frequency layer.
(2) Multiple positioning frequency layers in the positioning frequency layer combination or the positioning frequency layer list refer to a CP type configuration of the reference positioning frequency layer.
(3) Multiple positioning frequency layers in the positioning frequency layer combination or the positioning frequency layer list refer to an SCS configuration of the reference positioning frequency layer.
(4) Multiple positioning frequency layers in the positioning frequency layer combination or the positioning frequency layer list refer to a point A configuration of the reference positioning frequency layer.

Optionally, the CombSize, CP type, and subcarrier spacing for the multiple positioning frequency layers are the same.

For the common parameter:
the common parameter is a common parameter for one positioning frequency layer combination, that is, all positioning frequency layers belonging to the positioning frequency layer combination use the common parameter.

For example, the common parameter for the positioning frequency layer combination includes CombSize, CP type, SCS, and point A, which means that all positioning frequency layers belonging to the positioning frequency layer combination use the common CombSize, CP type, SCS and Point A.

For example, the common parameter for the positioning frequency layer combination includes frequency band information, which means that all positioning frequency layers belonging to the positioning frequency layer combination are in a same band. Optionally, the LMF may indicate whether a relationship between positioning frequency layers is intra-band continuous carrier aggregation or intra-band non-continuous carrier aggregation.

For example, in the configuration information of each positioning frequency layer, only some data different from other positioning frequency layers such as a bandwidth needs to be included for the positioning frequency layer. Other data can be defaulted, indicating referring to the reference frequency layer or the common parameter.

For example, the common parameter for the positioning frequency layer combination includes radio frequency information (such as RF chain identification information) or antenna (antenna) information or TEG information, indicating that all positioning frequency layers belonging to the positioning frequency layer combination are in a same RF chain, antenna, or TEG.

For example, the common parameter for the positioning frequency layer combination includes TRP information, which means that all the positioning frequency layers belonging to the positioning frequency layer combination contain a same TRP (or a same TRP list). For example, positioning frequency layer 1 contains 64 TRPs, and positioning frequency layer 2 contains exactly the same TRPs as positioning frequency layer 1, that is, PRS resources on positioning frequency layer 2 and PRS resources on positioning frequency layer 1 come from the same TRP, but frequency domain positions are different.

Optionally, each positioning frequency layer in the multiple positioning frequency layers contains a same TRP (or a same TRP list), and the terminal can perform aggregation processing on the multiple positioning frequency layers. In other words, each TRP simultaneously sends multiple PRS resources located in different positioning frequency layers, and the terminal performs aggregation processing.

Optionally, the same TRP included by the multiple positioning frequency layers contains same PRS resource set or PRS resource configuration information.

In another embodiment, the assistance data of the positioning frequency layer combination is represented by assistance data of each positioning frequency layer, and the assistance data of each positioning frequency layer is used to indicate identification information of the positioning frequency layer combination to which each positioning frequency layer belongs.

Assuming that there are a maximum of N positioning frequency layer combinations, such as N=4, the assistance data is used indicate which of positioning frequency layer combinations 1, 2, 3, or 4 each positioning frequency layer belongs to.

Optionally, before or after step 101, the following may be further included:
receiving, by the terminal, positioning assistance data, where the positioning assistance data includes configuration information of a positioning frequency layer combination and/or a positioning frequency layer.

Optionally, the configuration information for the positioning frequency layer includes identification information of the positioning frequency layer combination to which the positioning frequency layer belongs.

For the configuration information of the positioning frequency layer combination, refer to the aforementioned embodiment.

Optionally, the configuration information for the positioning frequency layer includes identification information, and the identification information includes at least one of the following: an ID of the positioning frequency layer, frequency domain information of the positioning frequency layer, a frequency band ID of the positioning frequency layer, and preference of the positioning frequency layer.

Optionally, multiple positioning frequency layers in a same positioning frequency layer combination satisfy a first condition, and the first condition is that the multiple positioning frequency layers have same first information; where the first information includes at least one of the following: a reference point A, an absolute radio frequency channel number ARFCN, a cell physical layer identifier PCI, and an NR cell global identifier NCGI.

Specifically, for example, the configuration information of the positioning frequency layer combination can be indicated in an implicit manner, for example, the assistance data of the multiple positioning frequency layers in the positioning frequency layer combination satisfies a first condition: having a same point A, or (at least one of point A, ARFCN, PCI, and NCGI) belonging to one positioning frequency layer combination (or it can be understood that aggregation processing can be performed).

For example, the first condition can be preconfigured or specified by a protocol.

In another embodiment, before step 101, the following is further included:
receiving, by the terminal, one or more preconfigured target on-demand PRS configuration information, where the preconfigured target on-demand PRS configuration information includes at least one of the following: an identifier ID of the preconfigured target on-demand PRS, information about multiple positioning frequency layers associated with the preconfigured target on-demand PRS, and a preconfigured parameter for the preconfigured target on-demand PRS; where
the information about the multiple positioning frequency layers associated with the preconfigured target on-demand PRS includes at least one of the following: identification information of a positioning frequency layer combination to which the positioning frequency layers belong, and third information related to the multiple positioning frequency layers;
the third information includes at least one of the following: IDs of the multiple positioning frequency layers, frequency domain information of the multiple positioning frequency layers, fourth information of each positioning frequency layer, number information of the multiple positioning frequency layers, frequency band IDs of the multiple positioning frequency layers, and preference of the multiple positioning frequency layers; and
the fourth information includes at least one of the following: a reference point A of each positioning frequency layer, a start physical resource block PRB of each positioning frequency layer, and a bandwidth of each positioning frequency layer.

Specifically, multiple on-demand PRSs that can be requested can be preconfigured, and for an identifier ID of the preconfigured on-demand PRS and information about multiple positioning frequency layers associated with the preconfigured on-demand PRS, refer to the aforementioned embodiment.

Optionally, the preconfigured parameters include, for example, at least one of the following:
SSB configuration for requested TRPs (SSB Configuration for requested TRPs);
desired beam direction (Desired Beam Direction);
DL-PRS configuration parameter (DL-PRS Configuration Parameter);
maximum number of frequency layers (Maximum Number of Frequency Layers);
frequency layer ID
maximum number of aggregated frequency layers;
DL-PRS positioning aggregation frequency layer information (DL-PRS Positioning Frequency Layer Information);
DL-PRS subcarrier spacing (DL-PRS Subcarrier Spacing);
DL-PRS aggregation resource bandwidth (DL-PRS Resource Bandwidth);
DL-PRS start PRB (DL-PRS Start PRB);
DL-PRS frequency domain position point A (DL-PRS PointA);
DL-PRS comb size N (DL-PRS Comb Size N);
DL-PRS cyclic prefix (DL-PRS Cyclic Prefix);
DL-PRS configuration of multiple frequency layers (DL-PRS Configuration per Frequency Layer).
DL-PRS identification information;
DL-PRS PCI;
absolute radio frequency channel number (Absolute Radio Frequency Channel Number, ARFCN);
5G standard cell global identity (NR Cell Global Identity, NCGI);
maximum number of DL-PRS resource sets (Maximum Number of DL-PRS Resource Sets);
DL-PRS resource set information (DL-PRS Resource Set Information);
DL-PRS resource set ID (DL-PRS Resource Set ID);
DL-PRS periodicity and resource set slot offset (DL-PRS Periodicity and Resource Set Slot Offset);
DL-PRS resource repetition factor (DL-PRS Resource Repetition Factor);
DL-PRS resource time gap (DL-PRS Resource Time Gap);
DL-PRS number of symbols (DL-PRS Number of Symbols);
DL-PRS muting option 1 (DL-PRS Muting Option 1);
DL-PRS muting option 2 (DL-PRS Muting Option 2);
DL-PRS resource power information (DL-PRS Resource Power);
maximum number of DL-PRS resources per DL-PRS resource set (Maximum Number of DL-PRS Resources per Set);
DL-PRS resource information (DL-PRS Resource Information);
DL-PRS resource ID (DL-PRS Resource ID);
DL-PRS sequence ID (DL-PRS Sequence ID);
DL-PRS RE offset (DL-PRS RE Offset);
DL-PRS resource slot offset (DL-PRS Resource Slot Offset); and
DL-PRS resource symbol offset (DL-PRS Resource Symbol Offset).

Optionally, the first on-demand PRS request carries IDs of one or more preconfigured target on-demand PRSs. That is, the ID of the target on-demand PRS is used for requesting the network-side device to configure, on the multiple positioning frequency layers, the target on-demand PRS on which aggregation processing is performed.

In an optional embodiment, the first on-demand PRS request further includes at least one of the following:
first indication information of an associated positioning frequency layer combination, where the first indication information is used to indicate that a target on-demand PRS satisfying the condition for aggregation is expected to be received;
a start time for transmitting an on-demand PRS for the associated positioning frequency layer combination;
a duration for transmitting an on-demand PRS for the associated positioning frequency layer combination;
a bandwidth for transmitting an on-demand PRS for the associated positioning frequency layer combination;
preferred configuration information for transmitting an on-demand PRS for the associated positioning frequency layer combination; where the preferred configuration information includes at least one of the following: a periodicity of the on-demand PRS, the number of symbols, a comb size, an SCS, and associated quasi-co-location QCL information; and
sixth information related to multiple positioning frequency layers included in the associated positioning frequency layer combination, where the sixth information includes at least one of the following: IDs of the multiple positioning frequency layers, frequency domain information of the multiple positioning frequency layers, number information of the multiple positioning frequency layers, frequency band IDs of the multiple positioning frequency layers, and preference of the multiple positioning frequency layers.

Specifically, the associated positioning frequency layer combination, that is, the positioning frequency layer combination associated with the first on-demand PRS request, means requesting the second network-side device to configure, on the multiple positioning frequency layers, the target on-demand PRS on which aggregation processing is performed.

A start time for transmitting an on-demand PRS of the associated positioning frequency layer combination may be, for example, a start time for transmitting the on-demand PRS for each positioning frequency layer included in the positioning frequency layer combination, and/or a start time for transmitting an on-demand PRS for the positioning frequency layer combination (for example, the earliest start time in start times of sending the on-demand PRS for the positioning frequency layers included in the positioning frequency layer combination). Optionally, a same start time is requested for the positioning frequency layers of the same positioning frequency layer combination or a start time of one on-demand PRS is used to indicate the start time for transmitting on-demand PRS for the multiple positioning frequency layers.

A duration of sending the on-demand PRS for the associated positioning frequency layer combination may be, for example, a sum of a duration of sending the on-demand PRS for each positioning frequency layer included in the positioning frequency layer combination, and/or the duration of sending the on-demand PRS for each positioning frequency layer included in the positioning frequency layer combination. Optionally, a same duration is requested for the positioning frequency layers of the same positioning frequency layer combination or a duration of one on-demand PRS is used to indicate the duration of sending on-demand PRS for the multiple positioning frequency layers.

A bandwidth of sending the on-demand PRS for the associated positioning frequency layer combination may be, for example, a sum of bandwidths of sending the on-demand PRS for the multiple positioning frequency layer included in the positioning frequency layer combination, and/or the bandwidth of sending the on-demand PRS for each positioning frequency layer included in the positioning frequency layer combination.

Preferred configuration information for sending the on-demand PRS for the associated positioning frequency layer combination is, for example, common configuration information for the multiple positioning frequency layers included in the positioning frequency layer combination. The preferred configuration information includes, for example, at least one of the following:
SSB configuration for requested TRPs (SSB Configuration for requested TRPs);
desired beam direction (Desired Beam Direction);
DL-PRS configuration parameter (DL-PRS Configuration Parameter);
maximum number of frequency layers (Maximum Number of Frequency Layers);
maximum number of aggregated frequency layers;
DL-PRS positioning aggregation frequency layer information (DL-PRS Positioning Frequency Layer Information);
DL-PRS subcarrier spacing (DL-PRS Subcarrier Spacing);
DL-PRS aggregation resource bandwidth (DL-PRS Resource Bandwidth);
DL-PRS start PRB (DL-PRS Start PRB);
DL-PRS frequency domain position point A (DL-PRS PointA);
DL-PRS comb size N (DL-PRS Comb Size N);
DL-PRS cyclic prefix (DL-PRS Cyclic Prefix);
DL-PRS configuration of multiple frequency layers (DL-PRS Configuration per Frequency Layer).
DL-PRS identification information;
DL-PRS PCI;
absolute radio frequency channel number (Absolute Radio Frequency Channel Number, ARFCN);
5G standard cell global identity (NR Cell Global Identity, NCGI);
maximum number of DL-PRS resource sets (Maximum Number of DL-PRS Resource Sets);
DL-PRS resource set information (DL-PRS Resource Set Information);
DL-PRS resource set ID (DL-PRS Resource Set ID);
DL-PRS periodicity and resource set slot offset (DL-PRS Periodicity and Resource Set Slot Offset);
DL-PRS resource repetition factor (DL-PRS Resource Repetition Factor);
DL-PRS resource time gap (DL-PRS Resource Time Gap);
DL-PRS number of symbols (DL-PRS Number of Symbols);
DL-PRS muting option 1 (DL-PRS Muting Option 1);
DL-PRS muting option 2 (DL-PRS Muting Option 2);
DL-PRS resource power information (DL-PRS Resource Power);
maximum number of DL-PRS resources per DL-PRS resource set (Maximum Number of DL-PRS Resources per Set);
DL-PRS resource information (DL-PRS Resource Information);
DL-PRS resource ID (DL-PRS Resource ID);
DL-PRS sequence ID (DL-PRS Sequence ID);
DL-PRS RE offset (DL-PRS RE Offset);
DL-PRS resource slot offset (DL-PRS Resource Slot Offset); and
DL-PRS resource symbol offset (DL-PRS Resource Symbol Offset).

In the foregoing implementation, the PRS and/or the positioning frequency layer is configured in various manners, featuring relatively great flexibility.

Optionally, the first on-demand PRS request is sent for the multiple positioning frequency layers, and the first on-demand PRS request further includes at least one of the following:
first indication information of associated multiple positioning frequency layers, where the first indication information is used to indicate that a target on-demand PRS satisfying the condition for aggregation is expected to be received;
a start time for transmitting an on-demand PRS for the associated multiple positioning frequency layers;
a duration for transmitting an on-demand PRS for the associated multiple positioning frequency layers;
a bandwidth for transmitting an on-demand PRS for the associated multiple positioning frequency layers;
preferred configuration information for transmitting an on-demand PRS for the associated multiple positioning frequency layers; where the preferred configuration information includes at least one of the following: a periodicity of the on-demand PRS, the number of symbols, a comb size, an SCS, and associated quasi-co-location QCL information; and
sixth information related to the associated multiple positioning frequency layers, where the sixth information includes at least one of the following: IDs of the multiple positioning frequency layers, frequency domain information of the multiple positioning frequency layers, number information of the multiple positioning frequency layers, frequency band IDs of the multiple positioning frequency layers, and preference of the multiple positioning frequency layers.

Specifically, the associated multiple positioning frequency layers, that is, the associated multiple positioning frequency layers for the first on-demand PRS request, means requesting the second network-side device to configure, on the multiple positioning frequency layers, the target on-demand PRS on which aggregation processing is performed.

The start time for transmitting the on-demand PRS for the associated multiple positioning frequency layers may be, for example, a start time for transmitting the on-demand PRS for each positioning frequency layer in the multiple positioning frequency layers, and/or a start time for transmitting the on-demand PRS for the multiple positioning frequency layers (for example, an earliest start time in start times of sending the on-demand PRS for the multiple positioning frequency layers).

The duration of sending the on-demand PRS for the associated multiple positioning frequency layers may be, for example, a sum of durations of sending the on-demand PRS for the multiple positioning frequency layers, and/or a duration of sending the on-demand PRS for each positioning frequency layer in the multiple positioning frequency layers.

The bandwidth of sending the on-demand PRS for the associated multiple positioning frequency layers may be, for example, a sum of bandwidths of sending the on-demand PRS for the multiple positioning frequency layers, and/or a bandwidth of sending the on-demand PRS for each positioning frequency layer in the multiple positioning frequency layers.

The preferred configuration information for sending the on-demand PRS for the multiple positioning frequency layers is, for example, common configuration information for the multiple positioning frequency layers.

For example, configuration information for the positioning frequency layer (explicit configuration information of the positioning frequency layer combination) and the positioning frequency layer combination are simultaneously configured.

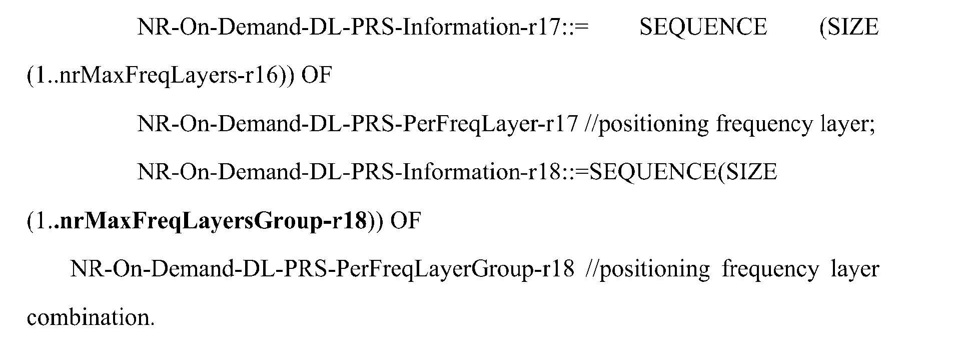

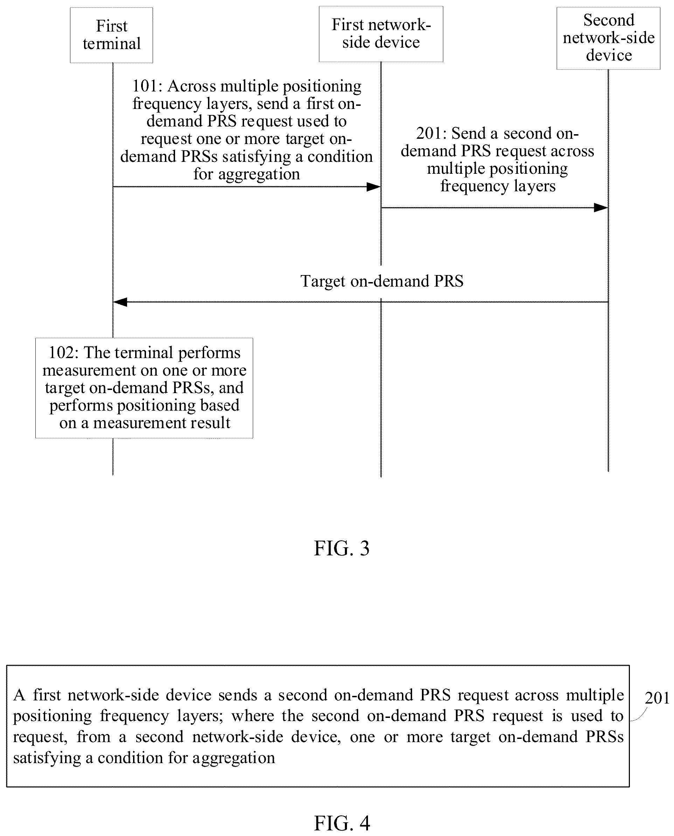

In an embodiment, as shown in FIG. 3, the method further includes:
Step 102: The terminal performs measurement on one or more target on-demand PRSs, and performs positioning based on a measurement result.

For example, the terminal can simultaneously perform measurement on the target on-demand PRS across multiple positioning frequency layers.

Optionally, the terminal may perform measurement on one or more target on-demand PRSs in the following manners:
the terminal performs aggregation processing on one or more on-demand PRSs of at least two positioning frequency layers of a same positioning frequency layer combination based on configuration information of the positioning frequency layer combination and terminal capability information; or
the terminal performs aggregation processing on one or more target on-demand PRSs of at least two positioning frequency layers across the multiple positioning frequency layers based on the terminal capability information.

In an optional embodiment, the aggregation processing may involve receiving the target on-demand PRS of at least two positioning frequency layers together using a same RF link and then performing an inverse Fourier transform. For example, if Fourier transform point counts for the two positioning frequency layers are A and B respectively, a Fourier transform point count for the aggregation processing may be A+B or greater than A+B. In another optional embodiment, the aggregation processing may involve receiving the target on-demand PRS of at least two positioning frequency layers together using the same RF link and then performing inverse Fourier transform separately. For example, if the Fourier transform point counts for the two positioning frequency layers are A and B respectively, the Fourier transform point counts for the aggregation processing may be A and B, and then measurements from both sides are combined for filtering or smoothing processing.

The terminal capability information includes, for example, whether the terminal supports simultaneous aggregation processing for multiple positioning frequency layers, the number of positioning frequency layers that the terminal can perform aggregation processing, and the like.

Optionally, that the terminal performs aggregation processing on one or more on-demand PRSs of at least two positioning frequency layers of a same positioning frequency layer combination based on configuration information of the positioning frequency layer combination and terminal capability information includes:
the terminal performs aggregation processing on the one or more on-demand PRSs of the at least two positioning frequency layers of the same positioning frequency layer combination based on the configuration information of the positioning frequency layer combination, terminal capability information, and second information; where
the second information includes at least one of the following: preference of the at least two positioning frequency layers, a reference point A, whether the at least two positioning frequency layers are located in one frequency band, and whether the at least two positioning frequency layers are contiguous.

Specifically, based on the configuration information of the positioning frequency layer combination, the terminal can perform aggregation processing on (two or more frequency layers) in the positioning frequency layer combination. Optionally, two or more positioning frequency layers can be determined based on the terminal capability information. For example, if the network-side device configures four positioning frequency layers to belong to positioning frequency layer combination 1 and the terminal can aggregate a maximum of two positioning frequency layers, the terminal may select two positioning frequency layers for aggregation processing based on preference of the positioning frequency layers, point A (the two positioning frequency layers with a lower Point A frequency point), whether to be located within one band, and/or whether the two positioning frequency layers are continuous frequency layers. For example, the terminal selects two connected positioning frequency layers for aggregation reception, or selects a positioning frequency layer with a low frequency point for aggregation reception, or selects a positioning frequency layer with an appropriate aggregation bandwidth for aggregation reception.

In the foregoing implementation, the terminal performs, based on the terminal capability information, aggregation processing on the target on-demand PRS for at least two positioning frequency layers in a same positioning frequency layer combination, so as to obtain better positioning performance, and implementation complexity of aggregation processing based on the terminal capability information is relatively low.

In an embodiment, the method further includes:
sending, by the terminal, measurement information to a second network-side device, where the measurement information includes one or more of the following:
a measurement result, where the measurement result includes at least one of a reference signal time difference RSTD, a reference signal received power (Reference Signal Receiving Power, RSRP), and a Rx-Tx time difference (UE Rx-Tx timing error); and
second indication information, where the second indication information is used to indicate whether the measurement result in the measurement information is a measurement result that has been obtained by aggregation processing on the multiple positioning frequency layers.

For example, The RSTD is an RSTD based on the target on-demand PRS, the RSRP is an RSRP based on the target on-demand PRS, and the Rx-Tx time difference is a Rx-Tx time difference for the target on-demand PRS.

Optionally, if the terminal reports a measurement result that has been obtained by aggregation processing on the multiple positioning frequency layers, the measurement result obtained after aggregation processing may be a measurement result for all (such as a positioning frequency layer combination) or part of the multiple positioning frequency layers.

Optionally, if the terminal reports the measurement result obtained after aggregation processing of the multiple positioning frequency layers, the terminal may alternatively report PRS resources of which positioning frequency layers are aggregated, which can be indicated in one of the following manners:
(1) Related identifier of a positioning frequency layer, such as at least one of a positioning frequency layer ID and a positioning frequency layer combination ID.
(2) Related identifier of a PRS resource set, such as a PRS resource set ID.
(3) Related identifier of a PRS resource, such as a PRS resource set ID + a PRS resource ID.
(4) Related identifier of a TRP. For example, multiple positioning frequency layers under a same TRP correspond to different TRP IDs.
(5) Frequency related information. For example, a positioning frequency layer associated with the measurement result is indicated by ARFCN.

Optionally, if the terminal aggregates corresponding positioning frequency layers according to an indication of the network-side device, the terminal may not indicate which positioning frequency layers are aggregated.

Optionally, if the terminal aggregates all positioning frequency layers according to an indication of the network-side device, the terminal may indicate that all positioning frequency layers are aggregated, or may not indicate which positioning frequency layers are aggregated.

Optionally, if the terminal reports the measurement result obtained after aggregation processing of the multiple positioning frequency layers, the terminal may alternatively report identification information corresponding to the measurement result, which can be indicated in one of the following manners:
(1) Report an ID combination associated with the measurement result, including at least one of TRP ID, PRS resource set ID, and PRS resource ID.

For example, the terminal processes multiple positioning frequency layers, and for a same TRP, may process multiple PRS resource sets and PRS resources correspondingly. During reporting, the terminal does not need to report all PRS-related IDs corresponding to each positioning frequency layer, but merely reports an ID corresponding to one positioning frequency layer, so that the network side can learn which PRS resources correspond to the measurement result.

Further, the ID combination comes from a specific positioning frequency layer in the aggregated positioning frequency layers, such as a reference positioning frequency layer in the positioning frequency layer combination.

(2) Report a positioning frequency layer combination ID. It indicates from which positioning frequency layer combination the measurement result is obtained.

(3) Report multiple ID combinations corresponding to measurement results of multiple TRPs, where the multiple ID combinations may come from a same positioning frequency layer.

Optionally, in a case that the terminal reports the measurement result obtained after aggregation processing, the reported measurement information may alternatively include an indication of whether the following information has been compensated: a phase offset (phase offset), a power offset (power offset), a frequency offset (frequency offset) and a frequency error (frequency error).

Optionally, if the terminal reports a measurement result of non-aggregation processing, the terminal may report a separate measurement result of each positioning frequency layer.

Optionally, if the terminal reports a measurement result of non-aggregation processing, the terminal may report a measurement result such as first path (time, power, or the like) and phase information for each positioning frequency layer.

Optionally, if the terminal reports a measurement result of non-aggregation processing, the terminal can report a cause of non-aggregation processing. For example, an aggregation processing condition is not met, it is not supported by the terminal capability, or an accuracy requirement can be achieved through non-aggregation processing.

Optionally, if the terminal reports a measurement result of non-aggregation processing, the terminal may report a measurement result obtained through joint estimation for the multiple positioning frequency layers. Optionally, the terminal may alternatively report a method of joint estimation, which positioning frequency layers are used for joint estimation, and so on.

Optionally, the terminal may report a measurement result of each positioning frequency layer.

Optionally, the terminal may report time stamp (time stamp) information corresponding to the measurement result.

Optionally, identification information associated with the time stamp at least includes one of a TRP ID, a PRS resource set ID, a positioning frequency layer ID, a positioning frequency layer combination ID, an NCGI, a PCI, and an ARFCN, which is used to indicate which positioning frequency layer and which TRP the time stamp is associated with.

In the foregoing implementation, the terminal sends measurement information, and the second network-side device may perform a corresponding operation based on the measurement information, such as adjusting a PRS configuration, so as to optimize a positioning scheme and further improve positioning performance.

Optionally, before step 101, the method further includes:
receiving, by the terminal, third indication information sent by the second network-side device, where the third indication information is used to indicate the terminal to perform aggregation processing on PRSs across all or part of the multiple positioning frequency layers.

Optionally, the third indication information may indicate the terminal to perform aggregation processing on PRS resources across all or part of the multiple positioning frequency layers for measurement, and/or indicate related information of the multiple positioning frequency layers for aggregation processing.

Optionally, the third indication information may include a TRP indication, which means that aggregation processing is performed on PRS resources across all or part of the multiple positioning frequency layers (multiple positioning frequency layers to be measured by the terminal) under a specific TRP.

Optionally, the related information of the multiple positioning frequency layers may include at least one of the following:
(1) A phase offset (phase offset), a power offset (power offset), a frequency offset (frequency offset), and a frequency error (frequency error) between different positioning frequency layers under a same TRP.

Optionally, the phase offset may be a phase offset between two positioning frequency layers. The phase offset may be caused by different positioning frequency layers being emitted from different radio frequency devices.

Optionally, the power offset may be an energy per resource element (Energy per Resource Element, EPRE) between two positioning frequency layers.

Optionally, the frequency offset may be a frequency offset between center frequency points or carrier frequencies between two positioning frequency layers.

Optionally, a unit of the frequency offset can be Hz or RB (resource block), or is a difference of frequency point ARFCN.

Optionally, the frequency error may be a frequency offset error caused by frequency drift between two positioning frequency layers.

Optionally, these values (phase offset, power offset, frequency offset, or frequency error) may be relative values with respect to a specific positioning frequency layer. A specific positioning frequency layer may be a reference positioning frequency layer or a positioning frequency layer indicated by the network.

(2) Quasi co-location (QuasiCo-Location, QCL) relationship of PRS resources between different positioning frequency layers under a same TRP.

Optionally, the QCL relationship may be one of QCL-A (type A QCL), QCL-C (type C QCL), QCL-D (type D QCL), QCL C+D (type C and type D QCLs), and QCL a+d (type A and type D QCLs).

Optionally, reference signal identification information between PRS resources includes at least one of the following: a TRP ID, a PRS resource set ID, a PRS resource ID, and a positioning frequency layer ID.

In the foregoing implementation, the terminal can perform a corresponding aggregation processing operation based on indication information of the network-side device, not requiring decision-making by the terminal, featuring relatively low implementation complexity.

Optionally, the method further includes:
sending, by the terminal, terminal capability information to a second network-side device or a location server, where the terminal capability information includes one or more of the following:
(1) Whether the terminal supports simultaneous measurement for multiple positioning frequency layers.
(2) Whether the terminal supports simultaneous aggregation processing for multiple positioning frequency layers.
   Optionally, a terminal-reported capability of supporting aggregation processing for multiple positioning frequency layers is not greater than a terminal-reported capability of simultaneous measurement for multiple positioning frequency layers.
(3) Whether the terminal supports PRS measurement for multiple positioning frequency layers when a measurement gap (measurement gap, MG) is used.
(4) Whether the terminal supports PRS measurement for multiple positioning frequency layers when an MG (for example, within a PRS processing window (PRS Processing Window, PPW)) is not used;
(5) Whether the terminal supports aggregation processing on non-continuous frequency domain PRS resources within one positioning frequency layer.
(6) The number of positioning frequency layer combinations supported by the terminal.
(7) The number of positioning frequency layers for which the terminal supports simultaneous measurement and/or aggregation processing.

Optionally, the number of positioning frequency layers for which the terminal supports simultaneous measurement and/or aggregation processing may be 2 or 4.

Optionally, in a case that the terminal supports simultaneous measurement and/or aggregation processing for multiple positioning frequency layers, the terminal capability information further includes one or more of the following:
(1) Types of multiple positioning frequency layers for which the terminal is able to perform simultaneous measurement and/or aggregation processing. Optionally, the types of positioning frequency layers may include intra-band (intra-band) continuous positioning frequency layers (such as intra-band continuous CA), intra-band non-continuous positioning frequency layers (such as intra-band non-continuous CA), and inter-band (inter-band) non-continuous positioning frequency layers (such as inter-band CA).
(2) A maximum bandwidth of the multiple positioning frequency layers for which the terminal supports simultaneous measurement.
(3) A maximum bandwidth of each positioning frequency layer of the multiple positioning frequency layers for which the terminal supports simultaneous measurement.
(4) At least one of a maximum channel spacing (channel spacing), a maximum timing offset (timing offset), a maximum phase offset (phase offset), a maximum frequency error (frequency error), and a maximum power imbalance (power imbalance) between positioning frequency layers for which the terminal is able to perform aggregation processing. Optionally, being between positioning frequency layers may indicate being between adjacent positioning frequency layers or between any two positioning frequency layers.

Optionally, in a case that the types of the multiple positioning frequency layers for which the terminal is able to perform simultaneous measurement and/or aggregation processing include a type of intra-band continuous positioning frequency layers, the terminal capability information further includes one or more of the following:
(1) the number of intra-band continuous positioning frequency layers supported by the terminal;
(2) a total maximum processing bandwidth of the terminal for the intra-band continuous positioning frequency layers; that is, a maximum total bandwidth that can be processed;
(3) a maximum processing bandwidth of the terminal for each positioning frequency layer of the intra-band continuous positioning frequency layers; and
(4) a maximum number of PRS resources that are able to be processed by the terminal in one time unit for the intra-band continuous positioning frequency layers. The time unit may be a slot (slot), a symbol, or the like.

Optionally, in a case that the types of the multiple positioning frequency layers for which the terminal is able to perform simultaneous measurement and/or aggregation processing include a type of intra-band non-continuous positioning frequency layers, the terminal capability information further includes one or more of the following:
(1) The number of intra-band non-continuous positioning frequency layers supported by the terminal.
(2) A total maximum processing bandwidth of the terminal for the intra-band non-continuous positioning frequency layers; that is, a maximum total bandwidth that can be processed.
(3) A maximum processing bandwidth of the terminal for each positioning frequency layer for the intra-band non-continuous positioning frequency layers.
(4) A maximum number of PRS resources that are able to be processed by the terminal in one time unit for the intra-band non-continuous positioning frequency layers. The time unit may be a slot (slot), a symbol, or the like.
(5) The number of non-continuous positioning frequency layer blocks supported by the terminal. The positioning frequency layer block may indicate continuous positioning frequency layers.

Optionally, the terminal capability information may alternatively include related information of each positioning frequency layer block, such as a maximum number of positioning frequency layers of each positioning frequency layer block, a maximum bandwidth of each positioning frequency layer block, and a maximum number of PRS resources that the terminal can process in one time unit for each positioning frequency layer block. The time unit may be a slot (slot), a symbol, or the like.

Optionally, in a case that the types of the multiple positioning frequency layers for which the terminal is able to perform simultaneous measurement and/or aggregation processing include a type of inter-band non-continuous positioning frequency layers, the terminal capability information further includes one or more of the following:
(1) The number of inter-band non-continuous positioning frequency layers supported by the terminal.
(2) A total maximum processing bandwidth of the terminal for the inter-band non-continuous positioning frequency layers; that is, a maximum total bandwidth that can be processed.
(3) A maximum processing bandwidth of the terminal for each positioning frequency layer for the inter-band non-continuous positioning frequency layers.
(4) A maximum number of PRS resources that the terminal can process in one time unit for the inter-band non-continuous positioning frequency layers. The time unit may be a slot (slot), a symbol, or the like.
(5) A maximum number of PRS resources that can be processed by the terminal in each time unit for the inter-band non-continuous positioning frequency layers. The time unit may be a slot (slot), a symbol, or the like.
(6) The number of bands supported by the terminal.

Optionally, the terminal capability information may alternatively include related information under each band, such as a maximum processing bandwidth of each band, a maximum number of positioning frequency layers in each band, a maximum number of PRS resources that the terminal can process in one time unit in each band, and the number of non-continuous positioning frequency layer blocks supported in each band. The time unit may be a slot (slot), a symbol, or the like.

Optionally, the terminal capability information may alternatively include related information of each positioning frequency layer block, such as a maximum number of positioning frequency layers of each positioning frequency layer block, a maximum bandwidth of each positioning frequency layer block, and a maximum number of PRS resources that the terminal can process in one time unit for each positioning frequency layer block. The time unit may be a slot (slot), a symbol, or the like.

Optionally, in a case that the terminal supports simultaneous measurement and/or aggregation processing for multiple positioning frequency layers, the terminal capability information further includes terminal processing capability (such as PRS-ProcessingCapabilityOutsideMGinPPWperType) information, where the terminal processing capability information includes one or more of the following:
(1) Frequency domain buffer (buffer) capability information of the terminal.

Optionally, the frequency domain buffer (buffer) capability of the terminal may be one of the following:
Type 1: For non-continuous PRSs in frequency domain, frequency domain bandwidths occupied by all PRSs between a lowest frequency domain position and a highest frequency domain position are buffered. Optionally, frequency domain bandwidths occupied by all PRSs may be a bandwidth of a band occupied by all the PRSs.
Type 2: For non-continuous PRSs in frequency domain, non-continuous PRSs in frequency domain are buffered based on segments. Optionally, only a frequency domain bandwidth occupied by the PRSs can be buffered.

(2) Processing capability information for independently processing one positioning frequency layer by the terminal.

For example, in a given maximum bandwidth, the processing capability for independently processing one positioning frequency layer by the terminal includes how long the terminal can process a PRS (for example, 3ms) and a time required for processing (for example, 10ms), and so on.

(3) Processing capability information of the terminal for aggregated multiple positioning frequency layers.

Optionally, the processing capability information of the terminal for aggregated multiple positioning frequency layers includes how long the terminal can process a PRS, a time required for processing, and so on.

The processing capability information of the terminal for aggregated multiple positioning frequency layers is related to at least one of the following:
an aggregation type for the positioning frequency layers;
the number of positioning frequency layers for aggregation;
a total bandwidth of positioning frequency layers for aggregation;
a bandwidth of each downlink (DL) for the positioning frequency layers for aggregation;
at least one of a channel spacing (channel spacing), a timing offset (timing offset), a phase offset, a frequency error, and a power imbalance (power imbalance) between positioning frequency layers;
whether to configure a measurement gap (Measurement Gap, MG);
a frequency domain buffer capability type; and
a time domain buffer capability type.

(4) Whether the terminal supports per-band (per band) reporting and/or per-band-combination (per band combination) reporting.

(5) A buffering time and processing time of the terminal for one positioning frequency layer.

(6) A buffering time and processing time of the terminal for the multiple positioning frequency layers.

Optionally, in a case that the terminal supports simultaneous measurement and/or aggregation processing for multiple positioning frequency layers, the terminal capability information further includes beam-related capability information, where the beam-related capability information includes one or more of the following:
(1) whether beams (direction) are the same at a same time point (such as an OFDM symbol (symbol) for the multiple positioning frequency layers for which the terminal supports simultaneous measurement and/or aggregation processing;
(2) whether beams (direction) are the same at a same time point (such as an OFDM symbol) for the multiple inter-band positioning frequency layers for which the terminal supports simultaneous measurement and/or aggregation processing; and
(3) whether beams (direction) are the same at a same time point (such as an OFDM symbol) for the multiple intra-band non-continuous positioning frequency layers for which the terminal supports simultaneous measurement and/or aggregation processing.

In the foregoing implementations, the terminal sends the terminal capability information to the network-side device, and the network-side device can perform a corresponding operation based on the terminal capability information, such as configuring a positioning frequency layer combination, a PRS, or the like, thereby improving the positioning performance.

FIG. 4 is a second flowchart of an on-demand PRS-based request method according to an embodiment of this application. As shown in FIG. 3 and FIG. 4, the method provided in this embodiment includes the following steps.

Step 201: A first network-side device sends a second on-demand PRS request across multiple positioning frequency layers; where the second on-demand PRS request is used to request, from a second network-side device, one or more target on-demand PRSs satisfying a condition for aggregation; and
the satisfying a condition for aggregation includes at least one of the following:
the target on-demand PRSs transmitted across the multiple positioning frequency layers have a same time-domain position;
the target on-demand PRSs transmitted across the multiple positioning frequency layers have a same subcarrier spacing SCS;
the target on-demand PRSs transmitted across the multiple positioning frequency layers have a same comb size;
the target on-demand PRSs transmitted across the multiple positioning frequency layers use a same cyclic prefix CP type;
the target on-demand PRSs transmitted across the multiple positioning frequency layers use a same reference point A; and
the target on-demand PRSs transmitted across the multiple positioning frequency layers include a same transmission and reception point TRP and/or a same number of TRPs.

Optionally, before the first network-side device sends the second on-demand PRS request across the multiple positioning frequency layers, the following is further included:
receiving, by the first network-side device, a first on-demand PRS request across multiple positioning frequency layers; where the first on-demand PRS request is used to request, from a first network-side device, one or more target on-demand PRSs satisfying a condition for aggregation.

Optionally, the first on-demand PRS request includes information about a target positioning frequency layer combination, which is used to indicate that the first on-demand PRS request is used for requesting to send the target on-demand PRSs on the target positioning frequency layer combination, and the target positioning frequency layer combination includes multiple positioning frequency layers; or
the first on-demand PRS request includes: aggregation indication information; where the aggregation indication information is used for indicating information about multiple positioning frequency layers expected to be aggregated.

Optionally, the second on-demand PRS request includes information about a target positioning frequency layer combination, which is used to indicate that the second on-demand PRS request is used for requesting to send the target on-demand PRS on the target positioning frequency layer combination, the target positioning frequency layer combination includes multiple positioning frequency layers, and the multiple positioning frequency layers belongs to at least one positioning frequency layer combination; or
the second on-demand PRS request includes: aggregation indication information; where the aggregation indication information is used for indicating information about multiple positioning frequency layers expected to be aggregated.

Optionally, the aggregation indication information includes at least one of the following:
first indication information, where the first indication information is used to indicate that a target on-demand PRS satisfying the condition for aggregation is expected to be received;
identifiers IDs of the multiple positioning frequency layers;
frequency domain information of the multiple positioning frequency layers;
number information of the multiple positioning frequency layers;
aggregation bandwidth information of the multiple positioning frequency layers; and
frequency band information to which the multiple positioning frequency layers belong.

Optionally, the method further includes:
sending, by the first network-side device, an on-demand PRS configuration request to the second network-side device across multiple positioning frequency layers, where the on-demand PRS configuration request is used to request the second network-side device to configure an on-demand PRS across multiple positioning frequency layers.

Optionally, the method further includes:
receiving, by the first network-side device, a configuration response for the target on-demand PRS sent by the second network-side device on the multiple positioning frequency layers.

Optionally, the method further includes:
sending, by the first network-side device, configuration information for a positioning frequency layer combination to the terminal; where the configuration information of the positioning frequency layer combination includes at least one of the following:
identification information of the positioning frequency layer combination;
assistance data of the positioning frequency layer combination; and
assistance data of multiple positioning frequency layers included in the positioning frequency layer combination.

Optionally, the method further includes:
the first network-side device sends positioning assistance data to the terminal, and the positioning assistance data includes positioning frequency layer combination and/or configuration information of positioning frequency layers.

Optionally, the configuration information for the positioning frequency layer includes identification information of the positioning frequency layer combination to which the positioning frequency layer belongs.

Optionally, multiple positioning frequency layers in a same positioning frequency layer combination satisfy a first condition, and the first condition is that the multiple positioning frequency layers have same first information; where the first information includes at least one of the following: a reference point A, an absolute radio frequency channel number ARFCN, a cell physical layer identifier PCI, and an NR cell global identifier NCGI.

Optionally, the assistance data of the positioning frequency layer combination includes at least one of the following:
third information related to positioning frequency layers included in the positioning frequency layer combination; and
assistance data for multiple positioning frequency layers, where the assistance data includes at least one of the following: information about reference positioning frequency layers and a common parameter of each positioning frequency layer combination; where
the third information includes at least one of the following: IDs of the multiple positioning frequency layers, frequency domain information of the multiple positioning frequency layers, fourth information of each positioning frequency layer, number information of the multiple positioning frequency layers, frequency band IDs of the multiple positioning frequency layers, and preference of the multiple positioning frequency layers; and
the fourth information includes at least one of the following: a reference point A of each positioning frequency layer, a start physical resource block PRB of each positioning frequency layer, and a bandwidth of each positioning frequency layer;
the reference positioning frequency layer is a frequency layer that provides reference fifth information to the multiple positioning frequency layers of the positioning frequency layer combination, and the fifth information includes at least one of the following: identification information of the reference positioning frequency layer, a comb size CombSize, a cyclic prefix CP, a subcarrier spacing, and a reference point A; and
the common parameter includes at least one of a comb size, a CP, a subcarrier spacing, a reference point A, continuous or non-continuous carrier aggregation in a frequency band, radio frequency information, antenna information, timing error group TEG information, and transmission and reception point TRP information.

Optionally, the method further includes:
sending, by the first network-side device, one or more preconfigured target on-demand PRS configuration information to the terminal, where the preconfigured target on-demand PRS configuration information includes at least one of the following: an identifier ID of the preconfigured target on-demand PRS, information about multiple positioning frequency layers associated with the preconfigured target on-demand PRS, and a preconfigured parameter for the preconfigured target on-demand PRS; where
the information about the multiple positioning frequency layers associated with the preconfigured target on-demand PRS includes at least one of the following: identification information of a positioning frequency layer combination to which the positioning frequency layers belong, and third information related to the multiple positioning frequency layers;
the third information includes at least one of the following: IDs of the multiple positioning frequency layers, frequency domain information of the multiple positioning frequency layers, fourth information of each positioning frequency layer, number information of the multiple positioning frequency layers, frequency band IDs of the multiple positioning frequency layers, and preference of the multiple positioning frequency layers; and
the fourth information includes at least one of the following: a reference point A of each positioning frequency layer, a start physical resource block PRB of each positioning frequency layer, and a bandwidth of each positioning frequency layer.

Optionally, the first on-demand PRS request carries IDs of one or more preconfigured target on-demand PRSs.

Optionally, the first on-demand PRS request further includes at least one of the following:
first indication information of an associated positioning frequency layer combination, where the first indication information is used to indicate that a target on-demand PRS satisfying the condition for aggregation is expected to be received;
a start time for transmitting an on-demand PRS for the associated positioning frequency layer combination;
a duration for transmitting an on-demand PRS for the associated positioning frequency layer combination;
a bandwidth for transmitting an on-demand PRS for the associated positioning frequency layer combination;
preferred configuration information for transmitting an on-demand PRS for the associated positioning frequency layer combination; where the preferred configuration information includes at least one of the following: a periodicity of the on-demand PRS, the number of symbols, a comb size, an SCS, and associated quasi-co-location QCL information; and
sixth information related to multiple positioning frequency layers included in the associated positioning frequency layer combination, where the sixth information includes at least one of the following: IDs of the multiple positioning frequency layers, frequency domain information of the multiple positioning frequency layers, number information of the multiple positioning frequency layers, frequency band IDs of the multiple positioning frequency layers, and preference of the multiple positioning frequency layers.

Optionally, the first on-demand PRS request further includes at least one of the following:
first indication information of associated multiple positioning frequency layers, where the first indication information is used to indicate that a target on-demand PRS satisfying the condition for aggregation is expected to be received;
a start time for transmitting an on-demand PRS for the associated multiple positioning frequency layers;
a duration for transmitting an on-demand PRS for the associated multiple positioning frequency layers;
a bandwidth for transmitting an on-demand PRS for the associated multiple positioning frequency layers;
preferred configuration information for transmitting an on-demand PRS for the associated multiple positioning frequency layers; where the preferred configuration information includes at least one of the following: a periodicity of the on-demand PRS, the number of symbols, a comb size, an SCS, and associated quasi-co-location QCL information; and
sixth information related to the associated multiple positioning frequency layers, where the sixth information includes at least one of the following: IDs of the multiple positioning frequency layers, frequency domain information of the multiple positioning frequency layers, number information of the multiple positioning frequency layers, frequency band IDs of the multiple positioning frequency layers, and preference of the multiple positioning frequency layers.

Optionally, the assistance data or configuration information for the positioning frequency layer includes identification information of the positioning frequency layer, and the identification information includes at least one of the following: an ID of the positioning frequency layer, frequency domain information of the positioning frequency layer, a frequency band ID of the positioning frequency layer, and preference of the positioning frequency layer.

Optionally, in a case that the target on-demand PRS includes a same transmission and reception point TRP across multiple positioning frequency layers, multiple target on-demand PRS resources on the multiple positioning frequency layers at a same time point under the same TRP satisfy one or more of the following:
being associated with a same spatial transmission filter;
having a same value of sequence number;
having a same value of resource element RE-level offset;
having a same value of number of symbols;
having a same value of symbol offset;
having a same value of slot level offset;
having a same value of transmit power; and
a transmit power being determined based on a transmission bandwidth of the positioning frequency layer.

Optionally, a PRS resource set to which each of the multiple target on-demand PRS resources belong satisfies one or more of the following:
having a same value of PRS periodicity;
having a same value of PRS resource set slot offset;
having a same value of PRS resource repetition factor;
having a same value of PRS resource repetition interval;
having a same value of PRS muting pattern; and
having a same number of PRS resources.

The specific implementation process and technical effects of the method in this embodiment are similar to those in the terminal-side method embodiments. For details, refer to detailed descriptions in the terminal-side method embodiments, which will not be repeated here.

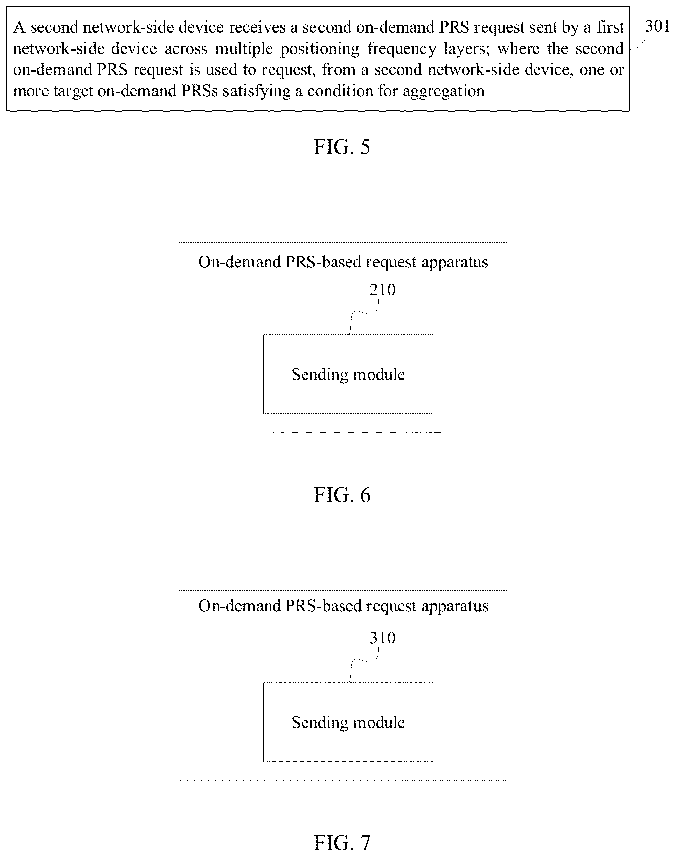

FIG. 5 is a third flowchart of an on-demand PRS-based request method according to an embodiment of this application. As shown in FIG. 5, the method provided in this embodiment includes:
Step 301: A second network-side device receives a second on-demand PRS request sent by a first network-side device across multiple positioning frequency layers; where the second on-demand PRS request is used to request, from a second network-side device, one or more target on-demand PRSs satisfying a condition for aggregation; and
the satisfying a condition for aggregation includes at least one of the following:
the target on-demand PRSs transmitted across the multiple positioning frequency layers have a same time-domain position;
the target on-demand PRSs transmitted across the multiple positioning frequency layers have a same subcarrier spacing SCS;
the target on-demand PRSs transmitted across the multiple positioning frequency layers have a same comb size;
the target on-demand PRSs transmitted across the multiple positioning frequency layers use a same cyclic prefix CP type;
the target on-demand PRSs transmitted across the multiple positioning frequency layers use a same reference point A; and
the target on-demand PRSs transmitted across the multiple positioning frequency layers include a same transmission and reception point TRP and/or a same number of TRPs.

Optionally, in an embodiment, the first network-side device is at least one of an LMF, an E-SMLC, or a location server; and the second network-side device is a network-side device that sends a PRS, such as a base station and a TRP.

Optionally, in an embodiment, after receiving the on-demand PRS request, the second network-side device sends a corresponding response to the first network-side device. The response may be to reject the request or to send an optional on-demand PRS configuration to the first network-side device. Optionally, the second on-demand PRS request includes information about a target positioning frequency layer combination, which is used to indicate that the second on-demand PRS request is used for requesting to send the target on-demand PRS on the target positioning frequency layer combination, and the target positioning frequency layer combination includes multiple positioning frequency layers; or
the second on-demand PRS request includes: aggregation indication information; where the aggregation indication information is used for indicating information about multiple positioning frequency layers expected to be aggregated.

The aggregation indication information includes at least one of the following:
first indication information, where the first indication information is used to indicate that a target on-demand PRS satisfying the condition for aggregation is expected to be received;
identifiers IDs of the multiple positioning frequency layers;
frequency domain information of the multiple positioning frequency layers;
number information of the multiple positioning frequency layers;
aggregation bandwidth information of the multiple positioning frequency layers; and
frequency band information to which the multiple positioning frequency layers belong.

Optionally, the second on-demand PRS request further includes at least one of the following:
first indication information of an associated positioning frequency layer combination, where the first indication information is used to indicate that a target on-demand PRS satisfying the condition for aggregation is expected to be received;
a start time for transmitting an on-demand PRS for the associated positioning frequency layer combination;
a duration for transmitting an on-demand PRS for the associated positioning frequency layer combination;
a bandwidth for transmitting an on-demand PRS for the associated positioning frequency layer combination;
preferred configuration information for transmitting an on-demand PRS for the associated positioning frequency layer combination; where the preferred configuration information includes at least one of the following: a periodicity of the on-demand PRS, the number of symbols, a comb size, an SCS, and associated quasi-co-location QCL information; and
sixth information related to multiple positioning frequency layers included in the associated positioning frequency layer combination, where the sixth information includes at least one of the following: IDs of the multiple positioning frequency layers, frequency domain information of the multiple positioning frequency layers, number information of the multiple positioning frequency layers, frequency band IDs of the multiple positioning frequency layers, and preference of the multiple positioning frequency layers.

Optionally, the second on-demand PRS request further includes at least one of the following:
first indication information of associated multiple positioning frequency layers, where the first indication information is used to indicate that a target on-demand PRS satisfying the condition for aggregation is expected to be received;
a start time for transmitting an on-demand PRS for the associated multiple positioning frequency layers;
a duration for transmitting an on-demand PRS for the associated multiple positioning frequency layers;
a bandwidth for transmitting an on-demand PRS for the associated multiple positioning frequency layers;
preferred configuration information for transmitting an on-demand PRS for the associated multiple positioning frequency layers; where the preferred configuration information includes at least one of the following: a periodicity of the on-demand PRS, the number of symbols, a comb size, an SCS, and associated quasi-co-location QCL information; and
sixth information related to the associated multiple positioning frequency layers, where the sixth information includes at least one of the following: IDs of the multiple positioning frequency layers, frequency domain information of the multiple positioning frequency layers, number information of the multiple positioning frequency layers, frequency band IDs of the multiple positioning frequency layers, and preference of the multiple positioning frequency layers.

Optionally, the method further includes:
the second network-side device receives an on-demand PRS configuration request sent by the first network-side device across multiple positioning frequency layers, where the on-demand PRS configuration request is used to request the second network-side device to configure an on-demand PRS across multiple positioning frequency layers.

Optionally, the method further includes:
the second network-side device sends a configuration response for the target on-demand PRS to the first network-side device across the multiple positioning frequency layers.

Optionally, the configuration response for the target on-demand PRS includes at least one of the following:
the number of positioning reference signal resources used for the on-demand PRS by the first network-side device, where a maximum number of positioning reference signal resources can be understood as the number of positioning reference signal resources identified by resources, or can be understood as the number of positioning reference signal resources;
the number of positioning reference signal resource sets used for the on-demand PRS by the first network-side device;
the number of TRPs used for the on-demand PRS by the first network-side device;
a bandwidth used for the on-demand PRS by the first network-side device;
a duration used for the on-demand PRS by the first network-side device;
a period used for the on-demand PRS by the first network-side device;
a time domain offset used for the on-demand PRS by the first network-side device;
a start time used for the on-demand PRS by the first network-side device;
the number of symbols used for the on-demand PRS by the first network-side device; and
a repetition count used for the on-demand PRS by the first network-side device.

The foregoing "being used for" may be understood as a configuration, a resource, and the like that may be used for the on-demand PRS by the first network-side device. That is, a resource (such as a time-frequency resource) indicated above may be used for configuring an on-demand PRS.

The configuration response includes at least one of the following:
error indication information;
error type information;
no resource information available;
error cause information;
acknowledgment (Acknowledgment, ACK) information;
negative acknowledgment (Negative ACKnowledgment, NACK) information; and
information indicating non-support for an on-demand PRS.

Optionally, the method further includes:
the second network-side device receives measurement information sent by the terminal, where the measurement information includes one or more of the following:
a measurement result, where the measurement result includes at least one of a reference signal time difference RSTD, a reference signal received power RSRP, and a Rx-Tx time difference;
second indication information, where the second indication information is used to indicate whether the measurement result in the measurement information is a measurement result that has been obtained by aggregation processing on the multiple positioning frequency layers.

Optionally, the method further includes:
the second network-side device sends third indication information to the terminal, where the third indication information is used to indicate the terminal to perform aggregation processing on PRSs across all or part of the multiple positioning frequency layers.

Optionally, the third indication information includes information about a transmission and reception point TRP and is used to indicate performing aggregation processing on PRSs across all or part of the multiple positioning frequency layers under the TRP.

Optionally, the method further includes:
the second network-side device receives terminal capability information sent by the terminal, where the terminal capability information includes at least one of the following:
whether the terminal supports simultaneous measurement for multiple positioning frequency layers;
whether the terminal supports simultaneous aggregation processing for multiple positioning frequency layers;
whether the terminal supports PRS measurement for multiple positioning frequency layers in a case that a measurement gap MG is used;
whether the terminal supports PRS measurement for multiple positioning frequency layers when an MG is not used;
whether the terminal supports aggregation processing on non-continuous frequency domain PRSs within one positioning frequency layer;
the number of positioning frequency layer combinations supported by the terminal; and
the number of positioning frequency layers for which the terminal supports simultaneous measurement and/or aggregation processing.

Optionally, in a case that the terminal supports simultaneous measurement and/or aggregation processing for multiple positioning frequency layers, the terminal capability information further includes at least one of the following:
types of multiple positioning frequency layers for which the terminal is able to perform simultaneous measurement and/or aggregation processing;
a maximum bandwidth of the multiple positioning frequency layers for which the terminal supports simultaneous measurement;
a maximum bandwidth of each positioning frequency layer of the multiple positioning frequency layers for which the terminal supports simultaneous measurement; and
at least one of a maximum channel spacing, a maximum timing offset, a maximum phase offset, a maximum frequency error, and a maximum power imbalance between positioning frequency layers for which the terminal is able to perform aggregation processing.

Optionally, in a case that the types of the multiple positioning frequency layers for which the terminal is able to perform simultaneous measurement and/or aggregation processing include a type of intra-band continuous positioning frequency layers, the terminal capability information further includes at least one of the following:
the number of intra-band continuous positioning frequency layers supported by the terminal;
a total maximum processing bandwidth of the terminal for the intra-band continuous positioning frequency layers;
a maximum processing bandwidth of the terminal for each positioning frequency layer of the intra-band continuous positioning frequency layers; and
a maximum number of PRS resources that are able to be processed by the terminal in one time unit for the intra-band continuous positioning frequency layers.

Optionally, in a case that the terminal supports simultaneous measurement and/or aggregation processing for multiple positioning frequency layers, the terminal capability information further includes terminal processing capability information, where the terminal processing capability information includes at least one of the following:
frequency domain buffer capability information of the terminal;
processing capability information for independently processing one positioning frequency layer by the terminal; and
processing capability information of the terminal for aggregated multiple positioning frequency layers.

Optionally, the processing capability information of the terminal for aggregated the multiple positioning frequency layers includes at least one of the following:
whether the terminal supports per-band reporting and/or per-band-combination reporting;
a buffering time and processing time of the terminal for one positioning frequency layer; and
a buffering time and processing time of the terminal for the multiple positioning frequency layers.

Optionally, the processing capability information of the terminal for aggregated the multiple positioning frequency layers is related to at least one of the following:
an aggregation type for the positioning frequency layers, the number of positioning frequency layers for aggregation, a total bandwidth of the positioning frequency layers for aggregation, a bandwidth of each downlink DL for the positioning frequency layers for aggregation, a channel spacing between the positioning frequency layers, a timing offset between the positioning frequency layers, a phase offset between the positioning frequency layers, a frequency error between the positioning frequency layers, a power imbalance between the positioning frequency layers, whether to configure a measurement gap, a frequency domain buffer capability type, and a time domain buffer capability type.

Optionally, in a case that the terminal supports simultaneous measurement and/or aggregation processing for multiple positioning frequency layers, the terminal capability information further includes beam-related capability information, where the beam-related capability information includes at least one of the following:
whether beams are the same at a same time point for the multiple positioning frequency layers for which the terminal supports simultaneous measurement and/or aggregation processing;
whether beams are the same at a same time point for multiple inter-band positioning frequency layers for which the terminal supports simultaneous measurement and/or aggregation processing; and
whether beams are the same at a same time point for multiple intra-band non-continuous positioning frequency layers for which the terminal supports simultaneous measurement and/or aggregation processing.

The specific implementation process and technical effects of the method in this embodiment are similar to those in the terminal-side method embodiments. For details, refer to detailed descriptions in the terminal-side method embodiments, which will not be repeated here.

The execution subject of the on-demand PRS-based request method provided in the embodiments of this application may be an on-demand PRS-based request apparatus. In the embodiments of this application, the on-demand PRS-based request apparatus provided in the embodiments of this application is described by using the on-demand PRS-based request method being executed by the on-demand PRS-based request apparatus as an example.

FIG. 6 is a first schematic structural diagram of an on-demand PRS-based request apparatus according to an embodiment of this application. As shown in FIG. 6, the on-demand PRS-based request apparatus provided in this embodiment includes:
a sending module 210, configured to send a first on-demand PRS request across multiple positioning frequency layers; where the first on-demand PRS request is used to request, from a first network-side device, one or more target on-demand PRSs satisfying a condition for aggregation; and
the satisfying a condition for aggregation includes at least one of the following:
   the target on-demand PRSs transmitted across the multiple positioning frequency layers have a same time-domain position;
   the target on-demand PRSs transmitted across the multiple positioning frequency layers have a same subcarrier spacing SCS;
   the target on-demand PRSs transmitted across the multiple positioning frequency layers have a same comb size;
   the target on-demand PRSs transmitted across the multiple positioning frequency layers use a same cyclic prefix CP type;
   the target on-demand PRSs transmitted across the multiple positioning frequency layers use a same reference point A; and
   the target on-demand PRSs transmitted across the multiple positioning frequency layers include a same transmission and reception point TRP and/or a same number of TRPs.

Optionally, the reference point A of the target on-demand PRSs transmitted across the multiple positioning frequency layers is a reference point A of a positioning frequency layer with a lowest frequency on the multiple positioning frequency layers; or a reference point A of a positioning frequency layer with a smallest ID on the multiple positioning frequency layers; or a reference point A of a specified positioning frequency layer on the multiple positioning frequency layers.

Optionally, the first on-demand PRS request includes information about a target positioning frequency layer combination, which is used to indicate that the first on-demand PRS request is used for requesting to send the target on-demand PRSs on the target positioning frequency layer combination, and the target positioning frequency layer combination includes multiple positioning frequency layers; or
the first on-demand PRS request includes: aggregation indication information; where the aggregation indication information is used for indicating information about multiple positioning frequency layers expected to be aggregated.

Optionally, the aggregation indication information includes at least one of the following:
first indication information, where the first indication information is used to indicate that a target on-demand PRS satisfying the condition for aggregation is expected to be received;
identifiers IDs of the multiple positioning frequency layers;
frequency domain information of the multiple positioning frequency layers;
number information of the multiple positioning frequency layers;
aggregation bandwidth information of the multiple positioning frequency layers; and
frequency band information to which the multiple positioning frequency layers belong.

Optionally, the apparatus further includes:
a receiving module, configured to receive configuration information of a positioning frequency layer combination before or after the first on-demand PRS request is sent on the multiple positioning frequency layers; where the configuration information of the positioning frequency layer combination includes at least one of the following:
identification information of the positioning frequency layer combination;
assistance data of the positioning frequency layer combination; and
assistance data of multiple positioning frequency layers included in the positioning frequency layer combination.

Optionally, the apparatus further includes:
a receiving module, configured to receive positioning assistance data before or after the first on-demand PRS request is sent on the multiple positioning frequency layers; where the positioning assistance data includes configuration information of a positioning frequency layer combination and/or a positioning frequency layer.

Optionally, the configuration information for the positioning frequency layer includes identification information of the positioning frequency layer combination to which the positioning frequency layer belongs.

Optionally, multiple positioning frequency layers in a same positioning frequency layer combination satisfy a first condition, and the first condition is that the multiple positioning frequency layers have same first information; where the first information includes at least one of the following: a reference point A, an absolute radio frequency channel number ARFCN, a cell physical layer identifier PCI, and an NR cell global identifier NCGI.

Optionally, the assistance data of the positioning frequency layer combination includes at least one of the following:
third information related to positioning frequency layers included in the positioning frequency layer combination; and
assistance data for multiple positioning frequency layers, where the assistance data includes at least one of the following: information about reference positioning frequency layers and a common parameter of each positioning frequency layer combination; where
the third information includes at least one of the following: IDs of the multiple positioning frequency layers, frequency domain information of the multiple positioning frequency layers, fourth information of each positioning frequency layer, number information of the multiple positioning frequency layers, frequency band IDs of the multiple positioning frequency layers, and preference of the multiple positioning frequency layers; and
the fourth information includes at least one of the following: a reference point A of each positioning frequency layer, a start physical resource block PRB of each positioning frequency layer, and a bandwidth of each positioning frequency layer;
the reference positioning frequency layer is a frequency layer that provides reference fifth information to the multiple positioning frequency layers of the positioning frequency layer combination, and the fifth information includes at least one of the following: identification information of the reference positioning frequency layer, a comb size CombSize, a cyclic prefix CP, a subcarrier spacing, and a reference point A; and
the common parameter includes at least one of a comb size, a CP, a subcarrier spacing, a reference point A, continuous or non-continuous carrier aggregation in a frequency band, radio frequency information, antenna information, timing error group TEG information, and transmission and reception point TRP information.

Optionally, the apparatus further includes:
a receiving module, configured to receive one or more preconfigured target on-demand PRS configuration information before the first on-demand PRS request is sent on the multiple positioning frequency layers, where the preconfigured target on-demand PRS configuration information includes at least one of the following items: an identifier ID of the preconfigured target on-demand PRS, information about multiple positioning frequency layers associated with the preconfigured target on-demand PRS, and a preconfigured parameter for the preconfigured target on-demand PRS; where
the information about the multiple positioning frequency layers associated with the preconfigured target on-demand PRS includes at least one of the following: identification information of a positioning frequency layer combination to which the positioning frequency layers belong, and third information related to the multiple positioning frequency layers;
the third information includes at least one of the following: IDs of the multiple positioning frequency layers, frequency domain information of the multiple positioning frequency layers, fourth information of each positioning frequency layer, number information of the multiple positioning frequency layers, frequency band IDs of the multiple positioning frequency layers, and preference of the multiple positioning frequency layers; and
the fourth information includes at least one of the following: a reference point A of each positioning frequency layer, a start physical resource block PRB of each positioning frequency layer, and a bandwidth of each positioning frequency layer.

Optionally, the first on-demand PRS request carries IDs of one or more preconfigured target on-demand PRSs.

Optionally, the first on-demand PRS request further includes at least one of the following:
first indication information of an associated positioning frequency layer combination, where the first indication information is used to indicate that a target on-demand PRS satisfying the condition for aggregation is expected to be received;
a start time for transmitting an on-demand PRS for the associated positioning frequency layer combination;
a duration for transmitting an on-demand PRS for the associated positioning frequency layer combination;
a bandwidth for transmitting an on-demand PRS for the associated positioning frequency layer combination;
preferred configuration information for transmitting an on-demand PRS for the associated positioning frequency layer combination; where the preferred configuration information includes at least one of the following: a periodicity of the on-demand PRS, the number of symbols, a comb size, an SCS, and associated quasi-co-location QCL information; and
sixth information related to multiple positioning frequency layers included in the associated positioning frequency layer combination, where the sixth information includes at least one of the following: IDs of the multiple positioning frequency layers, frequency domain information of the multiple positioning frequency layers, number information of the multiple positioning frequency layers, frequency band IDs of the multiple positioning frequency layers, and preference of the multiple positioning frequency layers.

Optionally, the first on-demand PRS request further includes at least one of the following:
first indication information of associated multiple positioning frequency layers, where the first indication information is used to indicate that a target on-demand PRS satisfying the condition for aggregation is expected to be received;
a start time for transmitting an on-demand PRS for the associated multiple positioning frequency layers;
a duration for transmitting an on-demand PRS for the associated multiple positioning frequency layers;
a bandwidth for transmitting an on-demand PRS for the associated multiple positioning frequency layers;
preferred configuration information for transmitting an on-demand PRS for the associated multiple positioning frequency layers; where the preferred configuration information includes at least one of the following: a periodicity of the on-demand PRS, the number of symbols, a comb size, an SCS, and associated quasi-co-location QCL information; and
sixth information related to the associated multiple positioning frequency layers, where the sixth information includes at least one of the following: IDs of the multiple positioning frequency layers, frequency domain information of the multiple positioning frequency layers, number information of the multiple positioning frequency layers, frequency band IDs of the multiple positioning frequency layers, and preference of the multiple positioning frequency layers.

Optionally, the configuration information of the positioning frequency layer includes identification information of the positioning frequency layer, and the identification information includes at least one of the following: an ID of the positioning frequency layer, frequency domain information of the positioning frequency layer, a frequency band ID of the positioning frequency layer, and preference of the positioning frequency layer.

Optionally, the apparatus further includes:
a processing module, configured to perform measurement on one or more target on-demand PRSs, and performing positioning based on a measurement result.

Optionally, the processing module is specifically configured to:
perform aggregation processing on one or more target on-demand PRSs of at least two positioning frequency layers of a same positioning frequency layer combination based on configuration information of the positioning frequency layer combination and terminal capability information; or
perform aggregation processing on one or more target on-demand PRSs of at least two positioning frequency layers across the multiple positioning frequency layers based on the terminal capability information.

Optionally, the processing module is specifically configured to:
perform aggregation processing on one or more target on-demand PRSs of the at least two positioning frequency layers of the same positioning frequency layer combination based on the configuration information of the positioning frequency layer combination, the terminal capability information, and second information; where
the second information includes at least one of the following: preference of the at least two positioning frequency layers, a reference point A, whether the at least two positioning frequency layers are located in one frequency band, and whether the at least two positioning frequency layers are contiguous.

Optionally, the sending module 210 is further configured to:
send measurement information to a second network-side device, where the measurement information includes one or more of the following items:
a measurement result, where the measurement result includes at least one of a reference signal time difference RSTD, a reference signal received power RSRP, and a Rx-Tx time difference;
second indication information, where the second indication information is used to indicate whether the measurement result in the measurement information is a measurement result that has been obtained by aggregation processing on the multiple positioning frequency layers.

Optionally, the receiving module is further configured to:
receive third indication information sent by the second network-side device, where the third indication information is used to indicate the terminal to perform aggregation processing on PRSs across all or part of the multiple positioning frequency layers.

Optionally, the third indication information includes information about a transmission and reception point TRP and is used to indicate performing aggregation processing on PRSs across all or part of the multiple positioning frequency layers under the TRP.

Optionally, the sending module 210 is further configured to:
send terminal capability information to a second network-side device or a location server, where the terminal capability information includes at least one of the following:
whether the terminal supports simultaneous measurement for multiple positioning frequency layers;
whether the terminal supports simultaneous aggregation processing for multiple positioning frequency layers;
whether the terminal supports PRS measurement for multiple positioning frequency layers in a case that a measurement gap MG is used;
whether the terminal supports PRS measurement for multiple positioning frequency layers when an MG is not used;
whether the terminal supports aggregation processing on non-continuous frequency domain PRSs within one positioning frequency layer;
the number of positioning frequency layer combinations supported by the terminal; and
the number of positioning frequency layers for which the terminal supports simultaneous measurement and/or aggregation processing.

Optionally, in a case that the terminal supports simultaneous measurement and/or aggregation processing for multiple positioning frequency layers, the terminal capability information further includes at least one of the following:
types of multiple positioning frequency layers for which the terminal is able to perform simultaneous measurement and/or aggregation processing;
a maximum bandwidth of the multiple positioning frequency layers for which the terminal supports simultaneous measurement;
a maximum bandwidth of each positioning frequency layer of the multiple positioning frequency layers for which the terminal supports simultaneous measurement; and
at least one of a maximum channel spacing, a maximum timing offset, a maximum phase offset, a maximum frequency error, and a maximum power imbalance between positioning frequency layers for which the terminal is able to perform aggregation processing.

Optionally, in a case that the types of the multiple positioning frequency layers for which the terminal is able to perform simultaneous measurement and/or aggregation processing include a type of intra-band continuous positioning frequency layers, the terminal capability information further includes at least one of the following:
the number of intra-band continuous positioning frequency layers supported by the terminal;
a total maximum processing bandwidth of the terminal for the intra-band continuous positioning frequency layers;
a maximum processing bandwidth of the terminal for each positioning frequency layer of the intra-band continuous positioning frequency layers; and
a maximum number of PRS resources that are able to be processed by the terminal in one time unit for the intra-band continuous positioning frequency layers.

Optionally, in a case that the terminal supports simultaneous measurement and/or aggregation processing for multiple positioning frequency layers, the terminal capability information further includes terminal processing capability information, where the terminal processing capability information includes at least one of the following:
frequency domain buffer capability information of the terminal;
processing capability information for independently processing one positioning frequency layer by the terminal; and
processing capability information of the terminal for aggregation of multiple positioning frequency layers.

Optionally, the processing capability information of the terminal for aggregation of the multiple positioning frequency layers includes at least one of the following:
whether the terminal supports per-band reporting and/or per-band-combination reporting;
a buffering time and processing time of the terminal for one positioning frequency layer; and
a buffering time and processing time of the terminal for the multiple positioning frequency layers.

Optionally, the processing capability information of the terminal for aggregation of the multiple positioning frequency layers is related to at least one of the following:
an aggregation type for the positioning frequency layers, the number of positioning frequency layers for aggregation, a total bandwidth of the positioning frequency layers for aggregation, a bandwidth of each downlink DL for the positioning frequency layers for aggregation, a channel spacing between the positioning frequency layers, a timing offset between the positioning frequency layers, a phase offset between the positioning frequency layers, a frequency error between the positioning frequency layers, a power imbalance between the positioning frequency layers, whether to configure a measurement gap, a frequency domain buffer capability type, and a time domain buffer capability type.

Optionally, in a case that the terminal supports simultaneous measurement and/or aggregation processing for multiple positioning frequency layers, the terminal capability information further includes beam-related capability information, where the beam-related capability information includes at least one of the following:
whether beams are the same at a same time point for the multiple positioning frequency layers for which the terminal supports simultaneous measurement and/or aggregation processing;
whether beams are the same at a same time point for multiple inter-band positioning frequency layers for which the terminal supports simultaneous measurement and/or aggregation processing; and
whether beams are the same at a same time point for multiple intra-band non-continuous positioning frequency layers for which the terminal supports simultaneous measurement and/or aggregation processing.

Optionally, in a case that the target on-demand PRS includes a same transmission and reception point TRP across multiple positioning frequency layers, multiple target on-demand PRS resources on the multiple positioning frequency layers at a same time point under the same TRP satisfy one or more of the following:
being associated with a same spatial transmission filter;
having a same value of sequence number;
having a same value of resource element RE-level offset;
having a same value of number of symbols;
having a same value of symbol offset;
having a same value of slot level offset;
having a same value of transmit power; and
a transmit power being determined based on a transmission bandwidth of the positioning frequency layer.

Optionally, a PRS resource set to which each of the multiple target on-demand PRS resources belong satisfies one or more of the following:
having a same value of PRS periodicity;
having a same value of PRS resource set slot offset;
having a same value of PRS resource repetition factor;
having a same value of PRS resource repetition interval;
having a same value of PRS muting pattern; and
having a same number of PRS resources.

The apparatus in this embodiment can be configured to execute the method in any one of the foregoing terminal-side method embodiments, and its specific implementation process and technical effects are similar to those in the terminal-side method embodiments. For details, refer to detailed descriptions in the terminal-side method embodiments, which will not be repeated here.

FIG. 7 is a second schematic structural diagram of an on-demand PRS-based request apparatus according to an embodiment of this application. As shown in FIG. 7, the on-demand PRS-based request apparatus provided in this embodiment includes:
a sending module 310, configured to send a second on-demand PRS request across multiple positioning frequency layers; where the second on-demand PRS request is used to request, from a second network-side device, one or more target on-demand PRSs satisfying a condition for aggregation; and
the satisfying a condition for aggregation includes at least one of the following:
   the target on-demand PRSs transmitted across the multiple positioning frequency layers have a same time-domain position;
   the target on-demand PRSs transmitted across the multiple positioning frequency layers have a same subcarrier spacing SCS;
   the target on-demand PRSs transmitted across the multiple positioning frequency layers have a same comb size;
   the target on-demand PRSs transmitted across the multiple positioning frequency layers use a same cyclic prefix CP type;
   the target on-demand PRSs transmitted across the multiple positioning frequency layers use a same reference point A; and
   the target on-demand PRSs transmitted across the multiple positioning frequency layers include a same transmission and reception point TRP and/or a same number of TRPs.

Optionally, the apparatus further includes:
a receiving module, configured to receive a first on-demand PRS request sent by the terminal on the multiple positioning frequency layers, before the second on-demand PRS request is sent on the multiple positioning frequency layers; where the first on-demand PRS request is used to request, from a first network-side device, one or more target on-demand PRSs satisfying a condition for aggregation.

Optionally, the first on-demand PRS request includes information about a target positioning frequency layer combination, which is used to indicate that the first on-demand PRS request is used for requesting to send the target on-demand PRSs on the target positioning frequency layer combination, and the target positioning frequency layer combination includes multiple positioning frequency layers; or
the first on-demand PRS request includes: aggregation indication information; where the aggregation indication information is used for indicating information about multiple positioning frequency layers expected to be aggregated.

Optionally, the second on-demand PRS request includes information about a target positioning frequency layer combination, which is used to indicate that the second on-demand PRS request is used for requesting to send the target on-demand PRS on the target positioning frequency layer combination, the target positioning frequency layer combination includes multiple positioning frequency layers, and the multiple positioning frequency layers belongs to at least one positioning frequency layer combination; or
the second on-demand PRS request includes: aggregation indication information; where the aggregation indication information is used for indicating information about multiple positioning frequency layers expected to be aggregated.

Optionally, the aggregation indication information includes at least one of the following:
first indication information, where the first indication information is used to indicate that a target on-demand PRS satisfying the condition for aggregation is expected to be received;
identifiers IDs of the multiple positioning frequency layers;
frequency domain information of the multiple positioning frequency layers;
number information of the multiple positioning frequency layers;
aggregation bandwidth information of the multiple positioning frequency layers; and
frequency band information to which the multiple positioning frequency layers belong.

Optionally, the sending module 310 is further configured to:
send an on-demand PRS configuration request to the second network-side device across multiple positioning frequency layers, where the on-demand PRS configuration request is used to request the second network-side device to configure an on-demand PRS across multiple positioning frequency layers.

Optionally, the receiving module is further configured to:
receive a configuration response for the target on-demand PRS sent by the second network-side device on the multiple positioning frequency layers.

Optionally, the sending module 310 is further configured to:
send configuration information for a positioning frequency layer combination to the terminal; where the configuration information of the positioning frequency layer combination includes at least one of the following:
identification information of the positioning frequency layer combination;
assistance data of the positioning frequency layer combination; and
assistance data of multiple positioning frequency layers included in the positioning frequency layer combination.

Optionally, the sending module 310 is further configured to:
send positioning assistance data to the terminal, where the positioning assistance data includes configuration information of a positioning frequency layer combination and/or a positioning frequency layer.

Optionally, the configuration information for the positioning frequency layer includes identification information of the positioning frequency layer combination to which the positioning frequency layer belongs.

Optionally, multiple positioning frequency layers in a same positioning frequency layer combination satisfy a first condition, and the first condition is that the multiple positioning frequency layers have same first information; where the first information includes at least one of the following: a reference point A, an absolute radio frequency channel number ARFCN, a cell physical layer identifier PCI, and an NR cell global identifier NCGI.

Optionally, the assistance data of the positioning frequency layer combination includes at least one of the following:
third information related to positioning frequency layers included in the positioning frequency layer combination; and
assistance data for multiple positioning frequency layers, where the assistance data includes at least one of the following: information about reference positioning frequency layers and a common parameter of each positioning frequency layer combination; where
the third information includes at least one of the following: IDs of the multiple positioning frequency layers, frequency domain information of the multiple positioning frequency layers, fourth information of each positioning frequency layer, number information of the multiple positioning frequency layers, frequency band IDs of the multiple positioning frequency layers, and preference of the multiple positioning frequency layers; and
the fourth information includes at least one of the following: a reference point A of each positioning frequency layer, a start physical resource block PRB of each positioning frequency layer, and a bandwidth of each positioning frequency layer;
the reference positioning frequency layer is a frequency layer that provides reference fifth information to the multiple positioning frequency layers of the positioning frequency layer combination, and the fifth information includes at least one of the following: identification information of the reference positioning frequency layer, a comb size CombSize, a cyclic prefix CP, a subcarrier spacing, and a reference point A; and
the common parameter includes at least one of a comb size, a CP, a subcarrier spacing, a reference point A, continuous or non-continuous carrier aggregation in a frequency band, radio frequency information, antenna information, timing error group TEG information, and transmission and reception point TRP information.

Optionally, the sending module 310 is further configured to:
send one or more preconfigured target on-demand PRS configuration information to the terminal, where the preconfigured target on-demand PRS configuration information includes at least one of the following items: an identifier ID of the preconfigured target on-demand PRS, information about multiple positioning frequency layers associated with the preconfigured target on-demand PRS, and a preconfigured parameter for the preconfigured target on-demand PRS; where
the information about the multiple positioning frequency layers associated with the preconfigured target on-demand PRS includes at least one of the following: identification information of a positioning frequency layer combination to which the positioning frequency layers belong, and third information related to the multiple positioning frequency layers;
the third information includes at least one of the following: IDs of the multiple positioning frequency layers, frequency domain information of the multiple positioning frequency layers, fourth information of each positioning frequency layer, number information of the multiple positioning frequency layers, frequency band IDs of the multiple positioning frequency layers, and preference of the multiple positioning frequency layers; and
the fourth information includes at least one of the following: a reference point A of each positioning frequency layer, a start physical resource block PRB of each positioning frequency layer, and a bandwidth of each positioning frequency layer.

Optionally, the first on-demand PRS request carries IDs of one or more preconfigured target on-demand PRSs.

Optionally, the first on-demand PRS request further includes at least one of the following:
first indication information of an associated positioning frequency layer combination, where the first indication information is used to indicate that a target on-demand PRS satisfying the condition for aggregation is expected to be received;
a start time for transmitting an on-demand PRS for the associated positioning frequency layer combination;
a duration for transmitting an on-demand PRS for the associated positioning frequency layer combination;
a bandwidth for transmitting an on-demand PRS for the associated positioning frequency layer combination;
preferred configuration information for transmitting an on-demand PRS for the associated positioning frequency layer combination; where the preferred configuration information includes at least one of the following: a periodicity of the on-demand PRS, the number of symbols, a comb size, an SCS, and associated quasi-co-location QCL information; and
sixth information related to multiple positioning frequency layers included in the associated positioning frequency layer combination, where the sixth information includes at least one of the following: IDs of the multiple positioning frequency layers, frequency domain information of the multiple positioning frequency layers, number information of the multiple positioning frequency layers, frequency band IDs of the multiple positioning frequency layers, and preference of the multiple positioning frequency layers.

Optionally, the first on-demand PRS request further includes at least one of the following:
first indication information of associated multiple positioning frequency layers, where the first indication information is used to indicate that a target on-demand PRS satisfying the condition for aggregation is expected to be received;
a start time for transmitting an on-demand PRS for the associated multiple positioning frequency layers;
a duration for transmitting an on-demand PRS for the associated multiple positioning frequency layers;
a bandwidth for transmitting an on-demand PRS for the associated multiple positioning frequency layers;
preferred configuration information for transmitting an on-demand PRS for the associated multiple positioning frequency layers; where the preferred configuration information includes at least one of the following: a periodicity of the on-demand PRS, the number of symbols, a comb size, an SCS, and associated quasi-co-location QCL information; and
sixth information related to the associated multiple positioning frequency layers, where the sixth information includes at least one of the following: IDs of the multiple positioning frequency layers, frequency domain information of the multiple positioning frequency layers, number information of the multiple positioning frequency layers, frequency band IDs of the multiple positioning frequency layers, and preference of the multiple positioning frequency layers.

Optionally, the assistance data or configuration information for the positioning frequency layer includes identification information of the positioning frequency layer, and the identification information includes at least one of the following: an ID of the positioning frequency layer, frequency domain information of the positioning frequency layer, a frequency band ID of the positioning frequency layer, and preference of the positioning frequency layer.

Optionally, in a case that the target on-demand PRS includes a same transmission and reception point TRP across multiple positioning frequency layers, multiple target on-demand PRS resources on the multiple positioning frequency layers at a same time point under the same TRP satisfy one or more of the following:
being associated with a same spatial transmission filter;
having a same value of sequence number;
having a same value of resource element RE-level offset;
having a same value of number of symbols;
having a same value of symbol offset;
having a same value of slot level offset;
having a same value of transmit power; and
a transmit power being determined based on a transmission bandwidth of the positioning frequency layer.

Optionally, a PRS resource set to which each of the multiple target on-demand PRS resources belong satisfies one or more of the following:
having a same value of PRS periodicity;
having a same value of PRS resource set slot offset;
having a same value of PRS resource repetition factor;
having a same value of PRS resource repetition interval;
having a same value of PRS muting pattern; and
having a same number of PRS resources.

The apparatus in this embodiment can be configured to execute the method in any one of the foregoing method embodiments for the first network-side device, and its specific implementation process and technical effects are similar to those in the method embodiments for the first network-side device. For details, refer to detailed descriptions in the method embodiments for the first network-side device, which will not be repeated here.

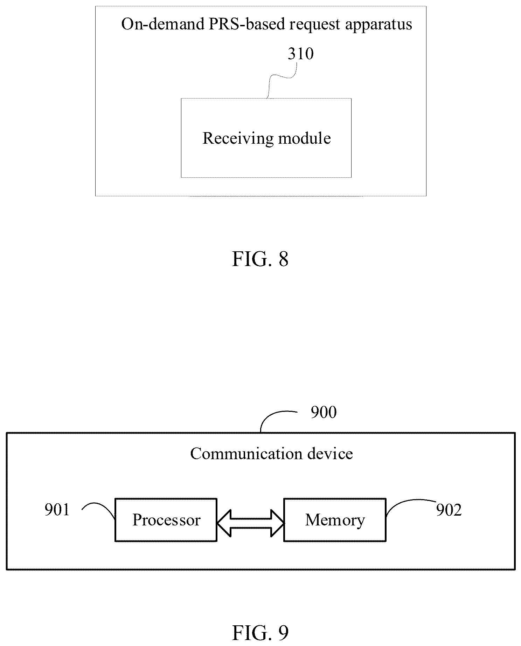

FIG. 8 is a third schematic structural diagram of an on-demand PRS-based request apparatus according to an embodiment of this application. As shown in FIG. 8, the on-demand PRS-based request apparatus provided in this embodiment includes:
a receiving module 410, configured to receive a second on-demand PRS request sent by a first network-side device across multiple positioning frequency layers; where the second on-demand PRS request is used to request, from a second network-side device, one or more target on-demand PRSs satisfying a condition for aggregation; and
the satisfying a condition for aggregation includes at least one of the following:
   the target on-demand PRSs transmitted across the multiple positioning frequency layers have a same time-domain position;
   the target on-demand PRSs transmitted across the multiple positioning frequency layers have a same subcarrier spacing SCS;
   the target on-demand PRSs transmitted across the multiple positioning frequency layers have a same comb size;
   the target on-demand PRSs transmitted across the multiple positioning frequency layers use a same cyclic prefix CP type;
   the target on-demand PRSs transmitted across the multiple positioning frequency layers use a same reference point A; and
   the target on-demand PRSs transmitted across the multiple positioning frequency layers include a same transmission and reception point TRP and/or a same number of TRPs.

Optionally, the second on-demand PRS request includes information about a target positioning frequency layer combination, which is used to indicate that the second on-demand PRS request is used for requesting to send the target on-demand PRS on the target positioning frequency layer combination, and the target positioning frequency layer combination includes multiple positioning frequency layers; or
the second on-demand PRS request includes: aggregation indication information; where the aggregation indication information is used for indicating information about multiple positioning frequency layers expected to be aggregated.

The aggregation indication information includes at least one of the following:
first indication information, where the first indication information is used to indicate that a target on-demand PRS satisfying the condition for aggregation is expected to be received;
identifiers IDs of the multiple positioning frequency layers;
frequency domain information of the multiple positioning frequency layers;
number information of the multiple positioning frequency layers;
aggregation bandwidth information of the multiple positioning frequency layers; and
frequency band information to which the multiple positioning frequency layers belong.

Optionally, the second on-demand PRS request further includes at least one of the following:
first indication information of an associated positioning frequency layer combination, where the first indication information is used to indicate that a target on-demand PRS satisfying the condition for aggregation is expected to be received;
a start time for transmitting an on-demand PRS for the associated positioning frequency layer combination;
a duration for transmitting an on-demand PRS for the associated positioning frequency layer combination;
a bandwidth for transmitting an on-demand PRS for the associated positioning frequency layer combination;
preferred configuration information for transmitting an on-demand PRS for the associated positioning frequency layer combination; where the preferred configuration information includes at least one of the following: a periodicity of the on-demand PRS, the number of symbols, a comb size, an SCS, and associated quasi-co-location QCL information; and
sixth information related to multiple positioning frequency layers included in the associated positioning frequency layer combination, where the sixth information includes at least one of the following: IDs of the multiple positioning frequency layers, frequency domain information of the multiple positioning frequency layers, number information of the multiple positioning frequency layers, frequency band IDs of the multiple positioning frequency layers, and preference of the multiple positioning frequency layers.

Optionally, the second on-demand PRS request further includes at least one of the following:
first indication information of associated multiple positioning frequency layers, where the first indication information is used to indicate that a target on-demand PRS satisfying the condition for aggregation is expected to be received;
a start time for transmitting an on-demand PRS for the associated multiple positioning frequency layers;
a duration for transmitting an on-demand PRS for the associated multiple positioning frequency layers;
a bandwidth for transmitting an on-demand PRS for the associated multiple positioning frequency layers;
preferred configuration information for transmitting an on-demand PRS for the associated multiple positioning frequency layers; where the preferred configuration information includes at least one of the following: a periodicity of the on-demand PRS, the number of symbols, a comb size, an SCS, and associated quasi-co-location QCL information; and
sixth information related to the associated multiple positioning frequency layers, where the sixth information includes at least one of the following: IDs of the multiple positioning frequency layers, frequency domain information of the multiple positioning frequency layers, number information of the multiple positioning frequency layers, frequency band IDs of the multiple positioning frequency layers, and preference of the multiple positioning frequency layers.

Optionally, the apparatus further includes:
a receiving module, configured to receive an on-demand PRS configuration request sent by the first network-side device across multiple positioning frequency layers, where the on-demand PRS configuration request is used to request the second network-side device to configure an on-demand PRS across multiple positioning frequency layers.

Optionally, the sending module 410 is further configured to:
send a configuration response for the target on-demand PRS to the first network-side device on the multiple positioning frequency layers.

Optionally, the receiving module is further configured to:
receive measurement information sent by the terminal, where the measurement information includes one or more of the following:
a measurement result, where the measurement result includes at least one of a reference signal time difference RSTD, a reference signal received power RSRP, and a Rx-Tx time difference;
second indication information, where the second indication information is used to indicate whether the measurement result in the measurement information is a measurement result that has been obtained by aggregation processing on the multiple positioning frequency layers.

Optionally, the sending module 410 is further configured to:
send third indication information to the terminal, where the third indication information is used to indicate the terminal to perform aggregation processing on PRSs across all or part of the multiple positioning frequency layers.

Optionally, the third indication information includes information about a transmission and reception point TRP and is used to indicate performing aggregation processing on PRSs across all or part of the multiple positioning frequency layers under the TRP.

Optionally, the receiving module is further configured to:
receive terminal capability information sent by the terminal, where the terminal capability information includes at least one of the following:
whether the terminal supports simultaneous measurement for multiple positioning frequency layers;
whether the terminal supports simultaneous aggregation processing for multiple positioning frequency layers;
whether the terminal supports PRS measurement for multiple positioning frequency layers in a case that a measurement gap MG is used;
whether the terminal supports PRS measurement for multiple positioning frequency layers when an MG is not used;
whether the terminal supports aggregation processing on non-continuous frequency domain PRSs within one positioning frequency layer;
the number of positioning frequency layer combinations supported by the terminal; and
the number of positioning frequency layers for which the terminal supports simultaneous measurement and/or aggregation processing.

Optionally, in a case that the terminal supports simultaneous measurement and/or aggregation processing for multiple positioning frequency layers, the terminal capability information further includes at least one of the following:
types of multiple positioning frequency layers for which the terminal is able to perform simultaneous measurement and/or aggregation processing;
a maximum bandwidth of the multiple positioning frequency layers for which the terminal supports simultaneous measurement;
a maximum bandwidth of each positioning frequency layer of the multiple positioning frequency layers for which the terminal supports simultaneous measurement; and
at least one of a maximum channel spacing, a maximum timing offset, a maximum phase offset, a maximum frequency error, and a maximum power imbalance between positioning frequency layers for which the terminal is able to perform aggregation processing.

Optionally, in a case that the types of the multiple positioning frequency layers for which the terminal is able to perform simultaneous measurement and/or aggregation processing include a type of intra-band continuous positioning frequency layers, the terminal capability information further includes at least one of the following:
the number of intra-band continuous positioning frequency layers supported by the terminal;
a total maximum processing bandwidth of the terminal for the intra-band continuous positioning frequency layers;
a maximum processing bandwidth of the terminal for each positioning frequency layer of the intra-band continuous positioning frequency layers; and
a maximum number of PRS resources that are able to be processed by the terminal in one time unit for the intra-band continuous positioning frequency layers.

Optionally, in a case that the terminal supports simultaneous measurement and/or aggregation processing for multiple positioning frequency layers, the terminal capability information further includes terminal processing capability information, where the terminal processing capability information includes at least one of the following:
frequency domain buffer capability information of the terminal;
processing capability information for independently processing one positioning frequency layer by the terminal; and
processing capability information of the terminal for aggregation of multiple positioning frequency layers.

Optionally, the processing capability information of the terminal for aggregation of the multiple positioning frequency layers includes at least one of the following:
whether the terminal supports per-band reporting and/or per-band-combination reporting;
a buffering time and processing time of the terminal for one positioning frequency layer; and
a buffering time and processing time of the terminal for the multiple positioning frequency layers.

Optionally, the processing capability information of the terminal for aggregation of the multiple positioning frequency layers is related to at least one of the following:
an aggregation type for the positioning frequency layers, the number of positioning frequency layers for aggregation, a total bandwidth of the positioning frequency layers for aggregation, a bandwidth of each downlink DL for the positioning frequency layers for aggregation, a channel spacing between the positioning frequency layers, a timing offset between the positioning frequency layers, a phase offset between the positioning frequency layers, a frequency error between the positioning frequency layers, a power imbalance between the positioning frequency layers, whether to configure a measurement gap, a frequency domain buffer capability type, and a time domain buffer capability type.

Optionally, in a case that the terminal supports simultaneous measurement and/or aggregation processing for multiple positioning frequency layers, the terminal capability information further includes beam-related capability information, where the beam-related capability information includes at least one of the following:
whether beams are the same at a same time point for the multiple positioning frequency layers for which the terminal supports simultaneous measurement and/or aggregation processing;
whether beams are the same at a same time point for multiple inter-band positioning frequency layers for which the terminal supports simultaneous measurement and/or aggregation processing; and
whether beams are the same at a same time point for multiple intra-band non-continuous positioning frequency layers for which the terminal supports simultaneous measurement and/or aggregation processing.

The apparatus in this embodiment can be configured to execute the method in any one of the foregoing method embodiments for the second network-side device, and its specific implementation process and technical effects are similar to those in the method embodiments for the second network-side device. For details, refer to detailed descriptions in the method embodiments for the second network-side device, which will not be repeated here.

The on-demand PRS-based request apparatus in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiments of this application.

The on-demand PRS-based request apparatus provided in the embodiment of this application can implement all the processes implemented in the method embodiments in FIG. 2 to FIG. 5, with the same technical effects achieved. To avoid repetition, details are not described herein again.

Optionally, as shown in FIG. 9, an embodiment of this application further provides a communication device 900, including a processor 901 and a memory 902. A program or instructions capable of running on the processor 901 are stored in the memory 902. For example, when the communication device 900 is a terminal and when the program or the instructions are executed by the processor 901, the steps of the foregoing embodiments of the on-demand PRS-based request method are implemented, with the same technical effects achieved. When the communication device 900 is a network-side device and when the program or the instructions are executed by the processor 901, the steps of the foregoing embodiments of the on-demand PRS-based request method are implemented, with the same technical effects achieved. To avoid repetition, details are not described herein again.

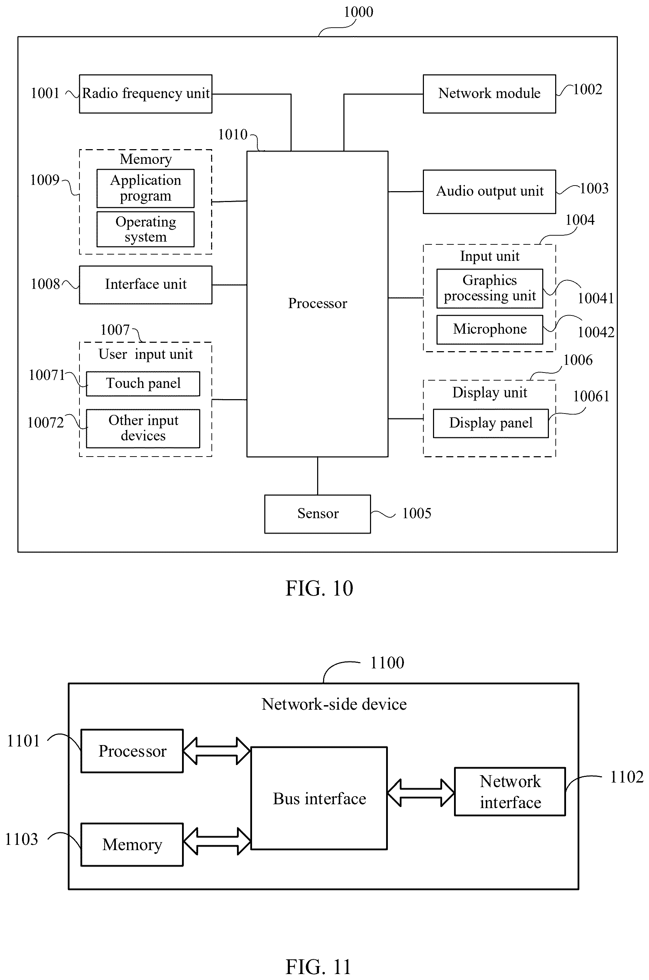

An embodiment of the application further provides a terminal, including a processor and a communication interface, where the processor is configured to send a first on-demand PRS request across multiple positioning frequency layers; where the first on-demand PRS request is used to request, from a first network-side device, one or more target on-demand PRSs satisfying a condition for aggregation; and
the satisfying a condition for aggregation includes at least one of the following:
the target on-demand PRSs transmitted across the multiple positioning frequency layers have a same time-domain position;
the target on-demand PRSs transmitted across the multiple positioning frequency layers have a same subcarrier spacing SCS;
the target on-demand PRSs transmitted across the multiple positioning frequency layers have a same comb size;
the target on-demand PRSs transmitted across the multiple positioning frequency layers use a same cyclic prefix CP type;
the target on-demand PRSs transmitted across the multiple positioning frequency layers use a same reference point A; and
the target on-demand PRSs transmitted across the multiple positioning frequency layers include a same transmission and reception point TRP and/or a same number of TRPs. The terminal embodiment corresponds to the foregoing terminal side method embodiment, and the implementation processes and implementations of the foregoing method embodiments can be applied to the terminal embodiments, with the same technical effects achieved. Optionally, the terminal may be a terminal. Specifically, FIG. 10 is a schematic diagram of a hardware structure of a terminal implementing an embodiment of this application.

The terminal 1000 includes but is not limited to at least part of components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Persons skilled in the art can understand that the terminal 1000 may further include a power supply (for example, a battery) supplying power to the components, and the power supply may be logically connected to the processor 1010 through a power management system. In this way, functions such as charge management, discharge management, and power consumption management are implemented by using the power management system. The structure of the terminal shown in FIG. 10 does not constitute any limitation on the terminal. The terminal may include more or fewer components than shown in the figure, or a combination of some components, or the components disposed differently. Details are not described herein again.

It can be understood that in this embodiment of this application, the input unit 1004 may include a graphics processing unit (Graphics Processing Unit, GPU) 10041 and a microphone 10042. The graphics processing unit 10041 processes image data of a still picture or video obtained by an image capture apparatus (such as a camera) in a video capture mode or an image capture mode. The display unit 1006 may include the display panel 10061. The display panel 10061 may be configured in a form of a liquid crystal display, an organic light-emitting diode, or the like. The user input unit 1007 includes at least one of a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function key (such as a volume control key or a power on/off key), a trackball, a mouse, a joystick, and the like. Details are not described herein.

In this embodiment of this application, after receiving downlink data from a network-side device, the radio frequency unit 1001 sends the downlink data to the processor 1010 for processing; and the radio frequency unit 1001 also sends uplink data to the network-side device. Generally, the radio frequency unit 1001 includes, but is not limited to, an antenna, at least one amplifier, a transceiver, a coupler, a low noise amplifier, a duplexer, and the like.

The memory 1009 may be configured to store software programs or instructions and various data. The memory 1009 may mainly include a first storage area for storing programs or instructions and a second storage area for storing data, where the first storage area may store an operating system, an application program or instructions required by at least one function (for example, an audio playing function and an image playing function), and the like. In addition, the memory 1009 may be a volatile memory or a non-volatile memory, or the memory 1009 may include a transitory memory or a non-transitory memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct memory bus random access memory (Direct Rambus RAM, DRRAM). The memory 1009 described in this embodiment this application includes but is not limited to these and any other suitable types of memories.

The processor 1010 may include one or more processing units. Optionally, the processor 1010 may integrate an application processor and a modem processor. The application processor mainly processes operations related to an operating system, a user interface, an application program, instructions, or the like. The modem processor mainly processes wireless communication signals, for example, a baseband processor. It can be understood that the modem processor may alternatively be not integrated in the processor 1010.

The radio frequency unit 1001 is configured to send a first on-demand PRS request across multiple positioning frequency layers; where the first on-demand PRS request is used to request, from a first network-side device, one or more target on-demand PRSs satisfying a condition for aggregation; and
the satisfying a condition for aggregation includes at least one of the following:
the target on-demand PRSs transmitted across the multiple positioning frequency layers have a same time-domain position;
the target on-demand PRSs transmitted across the multiple positioning frequency layers have a same subcarrier spacing SCS;
the target on-demand PRSs transmitted across the multiple positioning frequency layers have a same comb size;
the target on-demand PRSs transmitted across the multiple positioning frequency layers use a same cyclic prefix CP type;
the target on-demand PRSs transmitted across the multiple positioning frequency layers use a same reference point A; and
the target on-demand PRSs transmitted across the multiple positioning frequency layers include a same transmission and reception point TRP and/or a same number of TRPs.

Optionally, the reference point A of the target on-demand PRSs transmitted across the multiple positioning frequency layers is a reference point A of a positioning frequency layer with a lowest frequency on the multiple positioning frequency layers; or a reference point A of a positioning frequency layer with a smallest ID on the multiple positioning frequency layers; or a reference point A of a specified positioning frequency layer on the multiple positioning frequency layers.

Optionally, the first on-demand PRS request includes information about a target positioning frequency layer combination, which is used to indicate that the first on-demand PRS request is used for requesting to send the target on-demand PRSs on the target positioning frequency layer combination, and the target positioning frequency layer combination includes multiple positioning frequency layers; or
the first on-demand PRS request includes: aggregation indication information; where the aggregation indication information is used for indicating information about multiple positioning frequency layers expected to be aggregated.

Optionally, the aggregation indication information includes at least one of the following:
first indication information, where the first indication information is used to indicate that a target on-demand PRS satisfying the condition for aggregation is expected to be received;
identifiers IDs of the multiple positioning frequency layers;
frequency domain information of the multiple positioning frequency layers;
number information of the multiple positioning frequency layers;
aggregation bandwidth information of the multiple positioning frequency layers; and
frequency band information to which the multiple positioning frequency layers belong.

Optionally, the apparatus further includes:
a receiving module, configured to receive configuration information of a positioning frequency layer combination before or after the first on-demand PRS request is sent on the multiple positioning frequency layers; where the configuration information of the positioning frequency layer combination includes at least one of the following:
identification information of the positioning frequency layer combination;
assistance data of the positioning frequency layer combination; and
assistance data of multiple positioning frequency layers included in the positioning frequency layer combination.

Optionally, the radio frequency unit 1001 is further configured to receive positioning assistance data before or after the first on-demand PRS request is sent on the multiple positioning frequency layers; where the positioning assistance data includes configuration information of a positioning frequency layer combination and/or a positioning frequency layer.

Optionally, the configuration information for the positioning frequency layer includes identification information of the positioning frequency layer combination to which the positioning frequency layer belongs.

Optionally, multiple positioning frequency layers in a same positioning frequency layer combination satisfy a first condition, and the first condition is that the multiple positioning frequency layers have same first information; where the first information includes at least one of the following: a reference point A, an absolute radio frequency channel number ARFCN, a cell physical layer identifier PCI, and an NR cell global identifier NCGI.

Optionally, the assistance data of the positioning frequency layer combination includes at least one of the following:
third information related to positioning frequency layers included in the positioning frequency layer combination; and
assistance data for multiple positioning frequency layers, where the assistance data includes at least one of the following: information about reference positioning frequency layers and a common parameter of each positioning frequency layer combination; where
the third information includes at least one of the following: IDs of the multiple positioning frequency layers, frequency domain information of the multiple positioning frequency layers, fourth information of each positioning frequency layer, number information of the multiple positioning frequency layers, frequency band IDs of the multiple positioning frequency layers, and preference of the multiple positioning frequency layers; and
the fourth information includes at least one of the following: a reference point A of each positioning frequency layer, a start physical resource block PRB of each positioning frequency layer, and a bandwidth of each positioning frequency layer;
the reference positioning frequency layer is a frequency layer that provides reference fifth information to the multiple positioning frequency layers of the positioning frequency layer combination, and the fifth information includes at least one of the following: identification information of the reference positioning frequency layer, a comb size CombSize, a cyclic prefix CP, a subcarrier spacing, and a reference point A; and
the common parameter includes at least one of a comb size, a CP, a subcarrier spacing, a reference point A, continuous or non-continuous carrier aggregation in a frequency band, radio frequency information, antenna information, timing error group TEG information, and transmission and reception point TRP information.

Optionally, the radio frequency unit 1001 is further configured to receive one or more preconfigured target on-demand PRS configuration information before the first on-demand PRS request is sent on the multiple positioning frequency layers, where the preconfigured target on-demand PRS configuration information includes at least one of the following items: an identifier ID of the preconfigured target on-demand PRS, information about multiple positioning frequency layers associated with the preconfigured target on-demand PRS, and a preconfigured parameter for the preconfigured target on-demand PRS; where
the information about the multiple positioning frequency layers associated with the preconfigured target on-demand PRS includes at least one of the following: identification information of a positioning frequency layer combination to which the positioning frequency layers belong, and third information related to the multiple positioning frequency layers;
the third information includes at least one of the following: IDs of the multiple positioning frequency layers, frequency domain information of the multiple positioning frequency layers, fourth information of each positioning frequency layer, number information of the multiple positioning frequency layers, frequency band IDs of the multiple positioning frequency layers, and preference of the multiple positioning frequency layers; and
the fourth information includes at least one of the following: a reference point A of each positioning frequency layer, a start physical resource block PRB of each positioning frequency layer, and a bandwidth of each positioning frequency layer.

Optionally, the first on-demand PRS request carries IDs of one or more preconfigured target on-demand PRSs.

Optionally, the first on-demand PRS request further includes at least one of the following:
first indication information of an associated positioning frequency layer combination, where the first indication information is used to indicate that a target on-demand PRS satisfying the condition for aggregation is expected to be received;
a start time for transmitting an on-demand PRS for the associated positioning frequency layer combination;
a duration for transmitting an on-demand PRS for the associated positioning frequency layer combination;
a bandwidth for transmitting an on-demand PRS for the associated positioning frequency layer combination;
preferred configuration information for transmitting an on-demand PRS for the associated positioning frequency layer combination; where the preferred configuration information includes at least one of the following: a periodicity of the on-demand PRS, the number of symbols, a comb size, an SCS, and associated quasi-co-location QCL information; and
sixth information related to multiple positioning frequency layers included in the associated positioning frequency layer combination, where the sixth information includes at least one of the following: IDs of the multiple positioning frequency layers, frequency domain information of the multiple positioning frequency layers, number information of the multiple positioning frequency layers, frequency band IDs of the multiple positioning frequency layers, and preference of the multiple positioning frequency layers.

Optionally, the first on-demand PRS request further includes at least one of the following:
first indication information of associated multiple positioning frequency layers, where the first indication information is used to indicate that a target on-demand PRS satisfying the condition for aggregation is expected to be received;
a start time for transmitting an on-demand PRS for the associated multiple positioning frequency layers;
a duration for transmitting an on-demand PRS for the associated multiple positioning frequency layers;
a bandwidth for transmitting an on-demand PRS for the associated multiple positioning frequency layers;
preferred configuration information for transmitting an on-demand PRS for the associated multiple positioning frequency layers; where the preferred configuration information includes at least one of the following: a periodicity of the on-demand PRS, the number of symbols, a comb size, an SCS, and associated quasi-co-location QCL information; and
sixth information related to the associated multiple positioning frequency layers, where the sixth information includes at least one of the following: IDs of the multiple positioning frequency layers, frequency domain information of the multiple positioning frequency layers, number information of the multiple positioning frequency layers, frequency band IDs of the multiple positioning frequency layers, and preference of the multiple positioning frequency layers.

Optionally, the configuration information of the positioning frequency layer includes identification information of the positioning frequency layer, and the identification information includes at least one of the following: an ID of the positioning frequency layer, frequency domain information of the positioning frequency layer, a frequency band ID of the positioning frequency layer, and preference of the positioning frequency layer.

Optionally, the processor 1010 is further configured to perform measurement on one or more target on-demand PRSs, and performing positioning based on a measurement result.

Optionally, the processor 1010 is specifically configured to:
perform aggregation processing on one or more target on-demand PRSs of at least two positioning frequency layers of a same positioning frequency layer combination based on configuration information of the positioning frequency layer combination and terminal capability information; or
perform aggregation processing on one or more target on-demand PRSs of at least two positioning frequency layers across the multiple positioning frequency layers based on the terminal capability information.

Optionally, the processor 1010 is specifically configured to:
perform aggregation processing on one or more target on-demand PRSs of the at least two positioning frequency layers of the same positioning frequency layer combination based on the configuration information of the positioning frequency layer combination, the terminal capability information, and second information; where
the second information includes at least one of the following: preference of the at least two positioning frequency layers, a reference point A, whether the at least two positioning frequency layers are located in one frequency band, and whether the at least two positioning frequency layers are contiguous.

Optionally, the radio frequency unit 1001 is further configured to:
send measurement information to a second network-side device, where the measurement information includes one or more of the following items:
a measurement result, where the measurement result includes at least one of a reference signal time difference RSTD, a reference signal received power RSRP, and a Rx-Tx time difference;
second indication information, where the second indication information is used to indicate whether the measurement result in the measurement information is a measurement result that has been obtained by aggregation processing on the multiple positioning frequency layers.

Optionally, the radio frequency unit 1001 is further configured to:
receive third indication information sent by the second network-side device, where the third indication information is used to indicate the terminal to perform aggregation processing on PRSs across all or part of the multiple positioning frequency layers.

Optionally, the third indication information includes information about a transmission and reception point TRP and is used to indicate performing aggregation processing on PRSs across all or part of the multiple positioning frequency layers under the TRP.

Optionally, the radio frequency unit 1001 is further configured to:
send terminal capability information to a second network-side device or a location server, where the terminal capability information includes at least one of the following:
whether the terminal supports simultaneous measurement for multiple positioning frequency layers;
whether the terminal supports simultaneous aggregation processing for multiple positioning frequency layers;
whether the terminal supports PRS measurement for multiple positioning frequency layers in a case that a measurement gap MG is used;
whether the terminal supports PRS measurement for multiple positioning frequency layers when an MG is not used;
whether the terminal supports aggregation processing on non-continuous frequency domain PRSs within one positioning frequency layer;
the number of positioning frequency layer combinations supported by the terminal; and
the number of positioning frequency layers for which the terminal supports simultaneous measurement and/or aggregation processing.

Optionally, in a case that the terminal supports simultaneous measurement and/or aggregation processing for multiple positioning frequency layers, the terminal capability information further includes at least one of the following:
types of multiple positioning frequency layers for which the terminal is able to perform simultaneous measurement and/or aggregation processing;
a maximum bandwidth of the multiple positioning frequency layers for which the terminal supports simultaneous measurement;
a maximum bandwidth of each positioning frequency layer of the multiple positioning frequency layers for which the terminal supports simultaneous measurement; and
at least one of a maximum channel spacing, a maximum timing offset, a maximum phase offset, a maximum frequency error, and a maximum power imbalance between positioning frequency layers for which the terminal is able to perform aggregation processing.

Optionally, in a case that the types of the multiple positioning frequency layers for which the terminal is able to perform simultaneous measurement and/or aggregation processing include a type of intra-band continuous positioning frequency layers, the terminal capability information further includes at least one of the following:
the number of intra-band continuous positioning frequency layers supported by the terminal;
a total maximum processing bandwidth of the terminal for the intra-band continuous positioning frequency layers;
a maximum processing bandwidth of the terminal for each positioning frequency layer of the intra-band continuous positioning frequency layers; and
a maximum number of PRS resources that are able to be processed by the terminal in one time unit for the intra-band continuous positioning frequency layers.

Optionally, in a case that the terminal supports simultaneous measurement and/or aggregation processing for multiple positioning frequency layers, the terminal capability information further includes terminal processing capability information, where the terminal processing capability information includes at least one of the following:
frequency domain buffer capability information of the terminal;
processing capability information for independently processing one positioning frequency layer by the terminal; and
processing capability information of the terminal for aggregation of multiple positioning frequency layers.

Optionally, the processing capability information of the terminal for aggregation of the multiple positioning frequency layers includes at least one of the following:
whether the terminal supports per-band reporting and/or per-band-combination reporting;
a buffering time and processing time of the terminal for one positioning frequency layer; and
a buffering time and processing time of the terminal for the multiple positioning frequency layers.

Optionally, the processing capability information of the terminal for aggregation of the multiple positioning frequency layers is related to at least one of the following:
an aggregation type for the positioning frequency layers, the number of positioning frequency layers for aggregation, a total bandwidth of the positioning frequency layers for aggregation, a bandwidth of each downlink DL for the positioning frequency layers for aggregation, a channel spacing between the positioning frequency layers, a timing offset between the positioning frequency layers, a phase offset between the positioning frequency layers, a frequency error between the positioning frequency layers, a power imbalance between the positioning frequency layers, whether to configure a measurement gap, a frequency domain buffer capability type, and a time domain buffer capability type.

Optionally, in a case that the terminal supports simultaneous measurement and/or aggregation processing for multiple positioning frequency layers, the terminal capability information further includes beam-related capability information, where the beam-related capability information includes at least one of the following:
whether beams are the same at a same time point for the multiple positioning frequency layers for which the terminal supports simultaneous measurement and/or aggregation processing;
whether beams are the same at a same time point for multiple inter-band positioning frequency layers for which the terminal supports simultaneous measurement and/or aggregation processing; and
whether beams are the same at a same time point for multiple intra-band non-continuous positioning frequency layers for which the terminal supports simultaneous measurement and/or aggregation processing.

Optionally, in a case that the target on-demand PRS includes a same transmission and reception point TRP across multiple positioning frequency layers, multiple target on-demand PRS resources on the multiple positioning frequency layers at a same time point under the same TRP satisfy one or more of the following:
being associated with a same spatial transmission filter;
having a same value of sequence number;
having a same value of resource element RE-level offset;
having a same value of number of symbols;
having a same value of symbol offset;
having a same value of slot level offset;
having a same value of transmit power; and
a transmit power being determined based on a transmission bandwidth of the positioning frequency layer.

Optionally, a PRS resource set to which each of the multiple target on-demand PRS resources belong satisfies one or more of the following:
having a same value of PRS periodicity;
having a same value of PRS resource set slot offset;
having a same value of PRS resource repetition factor;
having a same value of PRS resource repetition interval;
having a same value of PRS muting pattern; and
having a same number of PRS resources.

The terminal in this embodiment can be configured to execute the on-demand PRS-based request method in the foregoing terminal-side embodiments, and its specific implementation process and technical effects are similar to those in the terminal-side method embodiments. For details, refer to detailed descriptions in the terminal-side method embodiments, which will not be repeated here.

An embodiment of the application further provides a first network-side device, including a processor and a communication interface, where the communication interface is configured to send a second on-demand PRS request across multiple positioning frequency layers; where the second on-demand PRS request is used to request, from a second network-side device, one or more target on-demand PRSs satisfying a condition for aggregation; and
the satisfying a condition for aggregation includes at least one of the following:
the target on-demand PRSs transmitted across the multiple positioning frequency layers have a same time-domain position;
the target on-demand PRSs transmitted across the multiple positioning frequency layers have a same subcarrier spacing SCS;
the target on-demand PRSs transmitted across the multiple positioning frequency layers have a same comb size;
the target on-demand PRSs transmitted across the multiple positioning frequency layers use a same cyclic prefix CP type;
the target on-demand PRSs transmitted across the multiple positioning frequency layers use a same reference point A; and
the target on-demand PRSs transmitted across the multiple positioning frequency layers include a same transmission and reception point TRP and/or a same number of TRPs. The first network-side device embodiment corresponds to the foregoing first network-side device method embodiment, and the implementation processes and implementations of the foregoing method embodiments can be applied to the first network-side device embodiment, with the same technical effects achieved.

Specifically, an embodiment of this application further provides a network-side device. As shown in FIG. 11, the network-side device 1100 includes a processor 1101, a network interface 1102, and a memory 1103. The network interface 1102 is, for example, a common public radio interface (common public radio interface, CPRI).

Specifically, the network-side device 1100 according to this embodiment of this application further includes instructions or programs stored in the memory 1103 and capable of running on the processor 1101, and the processor 1101 calls the instructions or programs in the memory 1103 to execute the methods performed by the modules shown in FIG. 6, with the same technical effects achieved. To avoid repetition, details are not described herein again.

An embodiment of the application further provides a second network-side device, including a processor and a communication interface, where the communication interface is configured to receive a second on-demand PRS request sent by a first network-side device across multiple positioning frequency layers; where the second on-demand PRS request is used to request, from a second network-side device, one or more target on-demand PRSs satisfying a condition for aggregation; and
the satisfying a condition for aggregation includes at least one of the following:
the target on-demand PRSs transmitted across the multiple positioning frequency layers have a same time-domain position;
the target on-demand PRSs transmitted across the multiple positioning frequency layers have a same subcarrier spacing SCS;
the target on-demand PRSs transmitted across the multiple positioning frequency layers have a same comb size;
the target on-demand PRSs transmitted across the multiple positioning frequency layers use a same cyclic prefix CP type;
the target on-demand PRSs transmitted across the multiple positioning frequency layers use a same reference point A; and
the target on-demand PRSs transmitted across the multiple positioning frequency layers include a same transmission and reception point TRP and/or a same number of TRPs.

The second network-side device embodiment corresponds to the foregoing second network-side device method embodiment, and the implementation processes and implementations of the foregoing method embodiments can be applied to the second network-side device embodiment, with the same technical effects achieved.

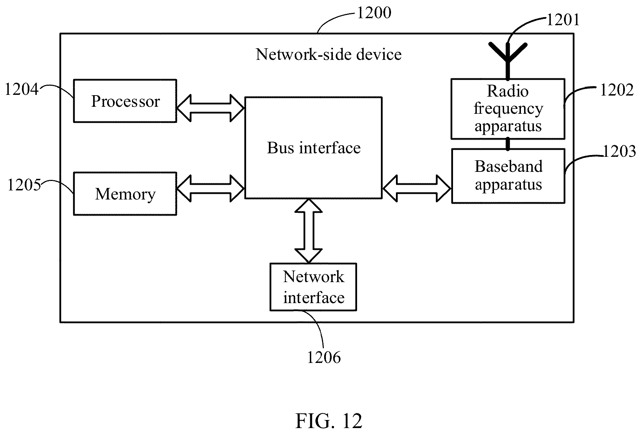

Specifically, an embodiment of this application further provides a network-side device. As shown in FIG. 12, the network-side device 1200 includes an antenna 1201, a radio frequency apparatus 1202, a baseband apparatus 1203, a processor 1204, and a memory 1205. The antenna 1201 is connected to the radio frequency apparatus 1202. In an uplink direction, the radio frequency apparatus 1202 receives information by using the antenna 1201, and sends the received information to the baseband apparatus 1203 for processing. In a downlink direction, the baseband apparatus 1203 processes to-be-sent information, and sends the information to the radio frequency apparatus 1202; and the radio frequency apparatus 1202 processes the received information and then sends the information out by using the antenna 1201.

The method performed by the network-side device in the foregoing embodiment may be implemented in the baseband apparatus 1203, and the baseband apparatus 1203 includes a baseband processor.

The baseband apparatus 1203 may include, for example, at least one baseband board, where multiple chips are disposed on the baseband board. As shown in FIG. 12, one of the chips is, for example, the baseband processor, and connected to the memory 1205 through a bus interface, to invoke the program in the memory 1205 to perform the operations of the network device shown in the foregoing method embodiment.

The network-side device may further include a network interface 1206, where the interface is, for example, a common public radio interface (common public radio interface, CPRI).

Specifically, the network-side device 1200 according to this embodiment of this application further includes instructions or programs stored in the memory 1205 and capable of running on the processor 1204, and the processor 1204 calls the instructions or programs in the memory 1205 to execute the on-demand PRS-based request method, with the same technical effects achieved. To avoid repetition, details are not described herein again.

An embodiment of this application further provides a readable storage medium, where the readable storage medium stores a program or instructions, and when the program or the instructions are executed by a processor, the processes of the foregoing embodiments of the on-demand PRS-based request method are implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement the processes of the foregoing embodiments of the on-demand PRS-based request method, with the same technical effects achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and when being executed by at least one processor, the computer program/program product is configured to implement the processes of the foregoing embodiments of the on-demand PRS-based request method, with the same technical effects achieved. To avoid repetition, details are not repeated herein.

An embodiment of the application further provides a communication system, including a terminal, a first network-side device, and a second network-side device, where the terminal can be configured to execute the steps of the on-demand PRS-based request method, and the first network-side device or the second network-side device can be configured to execute the steps of the on-demand PRS-based request method.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples can be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. An on-demand (on-demand) positioning reference signal PRS-based request method, comprising:
sending, by a terminal, a first on-demand PRS request across multiple positioning frequency layers; wherein the first on-demand PRS request is used to request, from a first network-side device, one or more target on-demand PRSs satisfying a condition for aggregation and
the satisfying a condition for aggregation comprises at least one of the following:
the target on-demand PRSs transmitted across the multiple positioning frequency layers have a same time-domain position;
the target on-demand PRSs transmitted across the multiple positioning frequency layers have a same subcarrier spacing SCS;
the target on-demand PRSs transmitted across the multiple positioning frequency layers have a same comb size;
the target on-demand PRSs transmitted across the multiple positioning frequency layers have a same cyclic prefix CP type;
the target on-demand PRSs transmitted across the multiple positioning frequency layers have a same reference point A; and
the target on-demand PRSs across the multiple positioning frequency layers comprises a same transmission and reception point TRP and/or a same number of TRPs.

2. The on-demand PRS-based request method according to claim 1, wherein the reference point A of the target on-demand PRSs transmitted across the multiple positioning frequency layers is a reference point A of a positioning frequency layer with a lowest frequency on the multiple positioning frequency layers; or a reference point A of a positioning frequency layer with a smallest ID on the multiple positioning frequency layers; or a reference point A of a specified positioning frequency layer on the multiple positioning frequency layers.

3. The on-demand PRS-based request method according to claim 1, wherein the first on-demand PRS request comprises information about a target positioning frequency layer combination, which is used to indicate that the first on-demand PRS request is used for requesting to send the target on-demand PRSs on the target positioning frequency layer combination, and the target positioning frequency layer combination comprises multiple positioning frequency layers; or
the first on-demand PRS request comprises: aggregation indication information; wherein the aggregation indication information is used for indicating information about multiple positioning frequency layers expected to be aggregated.

4. The on-demand PRS-based request method according to claim 3, wherein the aggregation indication information comprises at least one of the following:
first indication information, wherein the first indication information is used to indicate a target on-demand PRS satisfying the condition for aggregation is expected to be received;
an identifier IDs of the multiple positioning frequency layers;
frequency domain information of the multiple positioning frequency layers;
number information of the multiple positioning frequency layers;
aggregation bandwidth information of the multiple positioning frequency layers; and
frequency band information to which the multiple positioning frequency layers belong.

5. The on-demand PRS-based request method according to any one of claims 1 to 4, before or after the sending, by a terminal, a first on-demand PRS request across multiple positioning frequency layers, further comprising:
receiving, by the terminal, configuration information of a positioning frequency layer combination; wherein the configuration information for the positioning frequency layer combination comprises at least one of the following:
identification information of the positioning frequency layer combination;
assistance data of the positioning frequency layer combination; and
assistance data of multiple positioning frequency layers comprised in the positioning frequency layer combination.

6. The on-demand PRS-based request method according to any one of claims 1 to 4, before or after the sending, by a terminal, a first on-demand PRS request across multiple positioning frequency layers, further comprising:
receiving, by the terminal, positioning assistance data, wherein the positioning assistance data comprises configuration information of a positioning frequency layer combination and/or a positioning frequency layer.

7. The on-demand PRS-based request method according to claim 6, wherein the configuration information for the positioning frequency layer comprises identification information of a positioning frequency layer combination to which the positioning frequency layer belongs.

8. The on-demand PRS-based request method according to any one of claims 1 to 4, wherein multiple positioning frequency layers in a same positioning frequency layer combination satisfy a first condition, and the first condition is that the multiple positioning frequency layers have same first information; wherein the first information comprises at least one of the following: a reference point A, an absolute radio frequency channel number ARFCN, a cell physical layer identifier PCI, and an NR cell global identifier NCGI.

9. The on-demand PRS-based request method according to claim 5, wherein
the assistance data of the positioning frequency layer combination comprises at least one of the following:
third information related to positioning frequency layers comprised in the positioning frequency layer combination; and
assistance data for multiple positioning frequency layers, wherein the assistance data comprises at least one of the following: information about reference positioning frequency layers and a common parameter of each positioning frequency layer combination; wherein
the third information comprises at least one of the following: IDs of multiple positioning frequency layers, frequency domain information of multiple positioning frequency layers, fourth information of each positioning frequency layer, number information of multiple positioning frequency layers, frequency band IDs of multiple positioning frequency layers, and preference of multiple positioning frequency layers;
the fourth information comprises at least one of the following: a reference point A of each positioning frequency layer, a start physical resource block PRB of each positioning frequency layer, and a bandwidth of each positioning frequency layer;
the reference positioning frequency layer is a frequency layer that provides reference fifth information to the multiple positioning frequency layers of the positioning frequency layer combination, and the fifth information comprises at least one of the following: identification information of the reference positioning frequency layer, a comb size CombSize, a cyclic prefix CP, a subcarrier spacing, and a reference point A; and
the common parameter comprises at least one of a comb size, a CP, a subcarrier spacing, a reference point A, continuous or non-continuous carrier aggregation in a frequency band, radio frequency information, antenna information, timing error group TEG information, and transmission and reception point TRP information.

10. The on-demand PRS-based request method according to any one of claims 1 to 4, before the sending, by a terminal, a first on-demand PRS request across multiple positioning frequency layers, further comprising:
receiving, by the terminal, one or more preconfigured target on-demand PRS configuration information, wherein the preconfigured target on-demand PRS configuration information comprises at least one of the following: an identifier ID of the preconfigured target on-demand PRS, information of multiple positioning frequency layers associated with the preconfigured target on-demand PRS, and a preconfigured parameter for the preconfigured target on-demand PRS; wherein
the information of multiple positioning frequency layers associated with the preconfigured target on-demand PRS comprises at least one of the following: identification information of a positioning frequency layer combination to which the positioning frequency layers belong, and third information related to the multiple positioning frequency layers;
the third information comprises at least one of the following: IDs of multiple positioning frequency layers, frequency domain information of multiple positioning frequency layers, fourth information of each positioning frequency layer, number information of multiple positioning frequency layers, frequency band IDs of multiple positioning frequency layers, and preference of multiple positioning frequency layers; and
the fourth information comprises at least one of the following: a reference point A of each positioning frequency layer, a start physical resource block PRB of each positioning frequency layer, and a bandwidth of each positioning frequency layer.

11. The on-demand PRS-based request method according to claim 10, wherein the first on-demand PRS request carries IDs of one or more preconfigured target on-demand PRSs.

12. The on-demand PRS-based request method according to any one of claims 1 to 11, wherein the first on-demand PRS request further comprises at least one of the following:
first indication information of an associated positioning frequency layer combination, wherein the first indication information is used to indicate that a target on-demand PRS satisfying the condition for aggregation is expected to be received;
a start time for transmitting an on-demand PRS for the associated positioning frequency layer combination;
a duration for transmitting an on-demand PRS for the associated positioning frequency layer combination;
a bandwidth for transmitting an on-demand PRS for the associated positioning frequency layer combination;
preferred configuration information for transmitting an on-demand PRS for the associated positioning frequency layer combination; wherein the preferred configuration information comprises at least one of the following: a periodicity of the on-demand PRS, the number of symbols, a comb size, an SCS, and associated quasi-co-location QCL information; and
sixth information related to multiple positioning frequency layers comprised in the associated positioning frequency layer combination, wherein the sixth information comprises at least one of the following: IDs of the multiple positioning frequency layers, frequency domain information of the multiple positioning frequency layers, number information of the multiple positioning frequency layers, frequency band IDs of the multiple positioning frequency layers, and preference of the multiple positioning frequency layers.

13. The on-demand PRS-based request method according to any one of claims 1 to 11, wherein the first on-demand PRS request further comprises at least one of the following:
first indication information of associated multiple positioning frequency layers, wherein the first indication information is used to indicate that a target on-demand PRS satisfying the condition for aggregation is expected to be received;
a start time for transmitting an on-demand PRS for the associated multiple positioning frequency layers;
a duration for transmitting an on-demand PRS for the associated multiple positioning frequency layers;
a bandwidth for transmitting an on-demand PRS for the associated multiple positioning frequency layers;
preferred configuration information for transmitting an on-demand PRS for the associated multiple positioning frequency layers; wherein the preferred configuration information comprises at least one of the following: a periodicity of the on-demand PRS, the number of symbols, a comb size, an SCS, and associated quasi-co-location QCL information; and
sixth information related to the associated multiple positioning frequency layers, wherein the sixth information comprises at least one of the following: IDs of the multiple positioning frequency layers, frequency domain information of the multiple positioning frequency layers, number information of the multiple positioning frequency layers, frequency band IDs of the multiple positioning frequency layers, and preference of the multiple positioning frequency layers.

14. The on-demand PRS-based request method according to claim 6 or 7, wherein the configuration information for the positioning frequency layer comprises identification information of the positioning frequency layer, and the identification information comprises at least one of the following: an ID of the positioning frequency layer, frequency domain information of the positioning frequency layer, a frequency band ID of the positioning frequency layer, and preference of the positioning frequency layer.

15. The on-demand PRS-based request method according to claim 1, after the sending, by a terminal, a first on-demand PRS request across multiple positioning frequency layers, further comprising:
performing, by the terminal, measurement on one or more target on-demand PRSs, and performing positioning based on a measurement result.

16. The on-demand PRS-based request method according to claim 15, wherein the performing, by the terminal, measurement on one or more target on-demand PRSs comprises:
performing, by the terminal, aggregation processing on one or more target on-demand PRSs of at least two positioning frequency layers of a same positioning frequency layer combination based on configuration information for the positioning frequency layer combination and terminal capability information; or
performing, by the terminal, aggregation processing on one or more target on-demand PRSs of at least two positioning frequency layers across the multiple positioning frequency layers based on the terminal capability information.

17. The on-demand PRS-based request method according to claim 16, wherein the performing, by the terminal, aggregation processing on one or more target on-demand PRSs of at least two positioning frequency layers of a same positioning frequency layer combination based on configuration information of the positioning frequency layer combination and terminal capability information comprises:
performing, by the terminal, aggregation processing on one or more target on-demand PRSs of the at least two positioning frequency layers of the same positioning frequency layer combination based on the configuration information for the positioning frequency layer combination, the terminal capability information, and second information; wherein
the second information comprises at least one of the following: preference of the at least two positioning frequency layers, a reference point A, whether the at least two positioning frequency layers are located in one frequency band, and whether the at least two positioning frequency layers are contiguous.

18. The on-demand PRS-based request method according to any one of claims 1 to 11, wherein the method further comprises:
sending, by the terminal, measurement information to a second network-side device, wherein the measurement information comprises one or more of the following:
a measurement result, wherein the measurement result comprises at least one of a reference signal time difference RSTD, a reference signal received power RSRP, and a Rx-Tx time difference;
second indication information, wherein the second indication information is used to indicate whether the measurement result in the measurement information is a measurement result that has been obtained by aggregation processing on the multiple positioning frequency layers.

19. The on-demand PRS-based request method according to claim 18, wherein before the sending, by the terminal, measurement information to a second network-side device, the method further comprises:
receiving, by the terminal, third indication information sent by the second network-side device, wherein the third indication information is used to indicate the terminal to perform aggregation processing on PRSs across all or part of the multiple positioning frequency layers.

20. The on-demand PRS-based request method according to claim 19, wherein the third indication information comprises information about a transmission and reception point TRP and is used to indicate performing aggregation processing on PRSs across all or part of the multiple positioning frequency layers under the TRP.

21. The on-demand PRS-based request method according to any one of claims 1 to 11, wherein the method further comprises:
sending, by the terminal, terminal capability information to a second network-side device or a location server, wherein the terminal capability information comprises at least one of the following:
whether the terminal supports simultaneous measurement for multiple positioning frequency layers;
whether the terminal supports simultaneous aggregation processing for multiple positioning frequency layers;
whether the terminal supports PRS measurement for multiple positioning frequency layers when a measurement gap MG is used;
whether the terminal supports PRS measurement for multiple positioning frequency layers when an MG is not used;
whether the terminal supports aggregation processing for non-continuous frequency domain PRSs within one positioning frequency layer;
the number of positioning frequency layer combinations supported by the terminal; and
the number of positioning frequency layers for which the terminal supports simultaneous measurement and/or aggregation processing.

22. The on-demand PRS-based request method according to claim 21, wherein in a case that the terminal supports simultaneous measurement and/or aggregation processing for multiple positioning frequency layers, the terminal capability information further comprises at least one of the following:
types of the multiple positioning frequency layers for which the terminal is able to perform simultaneous measurement and/or aggregation processing;
a maximum bandwidth of the multiple positioning frequency layers for which the terminal supports simultaneous measurement;
a maximum bandwidth of each positioning frequency layer of the multiple positioning frequency layers for which the terminal supports simultaneous measurement; and
at least one of a maximum channel spacing, a maximum timing offset, a maximum phase offset, a maximum frequency error, and a maximum power imbalance between positioning frequency layers for which the terminal is able to perform aggregation processing.

23. The on-demand PRS-based request method according to claim 22, wherein in a case that the types of the multiple positioning frequency layers for which the terminal is able to perform simultaneous measurement and/or aggregation processing comprise a type of intra-band continuous positioning frequency layers, the terminal capability information further comprises at least one of the following:
the number of intra-band continuous positioning frequency layers supported by the terminal;
a total maximum processing bandwidth of the terminal for the intra-band continuous positioning frequency layers;
a maximum processing bandwidth of the terminal for each positioning frequency layer of the intra-band continuous positioning frequency layers; and
a maximum number of PRS resources that can be processed by the terminal in one time unit for the intra-band continuous positioning frequency layers.

24. The on-demand PRS-based request method according to claim 22, wherein in a case that the terminal supports simultaneous measurement and/or aggregation processing for multiple positioning frequency layers, the terminal capability information further comprises terminal processing capability information, wherein the terminal processing capability information comprises at least one of the following:
frequency domain buffer capability information of the terminal;
processing capability information for independently processing one positioning frequency layer by the terminal; and
processing capability information of the terminal for aggregation of multiple positioning frequency layers.

25. The on-demand PRS-based request method according to claim 24, wherein the processing capability information of the terminal for aggregation of the multiple positioning frequency layers comprises at least one of the following:
whether the terminal supports per-band reporting and/or per-band-combination reporting;
a buffering time and processing time of the terminal for one positioning frequency layer; and
a buffering time and processing time of the terminal for the multiple positioning frequency layers.

26. The on-demand PRS-based request method according to claim 24, wherein the processing capability information of the terminal for aggregation of the multiple positioning frequency layers is related to at least one of the following:
an aggregation type for the positioning frequency layers, the number of positioning frequency layers for aggregation, a total bandwidth of the positioning frequency layers for aggregation, a bandwidth of each downlink DL for the positioning frequency layers for aggregation, a channel spacing between the positioning frequency layers, a timing offset between the positioning frequency layers, a phase offset between the positioning frequency layers, a frequency error between the positioning frequency layers, a power imbalance between the positioning frequency layers, whether to configure a measurement gap, a frequency domain buffer capability type, and a time domain buffer capability type.

27. The on-demand PRS-based request method according to claim 22, wherein in a case that the terminal supports simultaneous measurement and/or aggregation processing for multiple positioning frequency layers, the terminal capability information further comprises beam-related capability information, wherein the beam-related capability information comprises at least one of the following:
whether beams are the same at a same time point for the multiple positioning frequency layers for which the terminal supports simultaneous measurement and/or aggregation processing;
whether beams are the same at a same time point for multiple inter-band positioning frequency layers for which the terminal supports simultaneous measurement and/or aggregation processing; and
whether beams are the same at a same time point for multiple intra-band non-continuous positioning frequency layers for which the terminal supports simultaneous measurement and/or aggregation processing.

28. The on-demand PRS-based request method according to any one of claims 1 to 11, wherein in a case that the target on-demand PRS comprises a same transmission and reception point TRP across multiple positioning frequency layers, multiple target on-demand PRS resources on the multiple positioning frequency layers at a same time point from the same TRP satisfy one or more of the following:
being associated with a same spatial transmission filter;
having a same value of sequence number;
having a same value of resource element RE-level offset;
having a same value of number of symbols;
having a same value of symbol offset;
having a same value of slot level offset;
having a same value of transmit power; and
a transmit power being determined based on a transmission bandwidth of the positioning frequency layer.

29. The on-demand PRS-based request method according to claim 28, wherein a PRS resource set to which each of the multiple target on-demand PRS resources belongs satisfies one or more of the following:
having a same value of PRS periodicity;
having a same value of PRS resource set slot offset;
having a same value of PRS resource repetition factor;
having a same value of PRS resource repetition interval;
having a same value of PRS muting pattern; and
having a same number of PRS resources.

30. An on-demand PRS-based request method, comprising:
sending, by a first network-side device, a second on-demand PRS request across multiple positioning frequency layers; wherein the second on-demand PRS request is used to request, from a second network-side device, one or more target on-demand PRSs satisfying a condition for aggregation; and
the satisfying a condition for aggregation comprises at least one of the following:
the target on-demand PRSs transmitted across the multiple positioning frequency layers have a same time-domain position;
the target on-demand PRSs transmitted across the multiple positioning frequency layers have a same subcarrier spacing SCS;
the target on-demand PRSs transmitted across the multiple positioning frequency layers have a same comb size;
the target on-demand PRSs transmitted across the multiple positioning frequency layers use a same cyclic prefix CP type;
the target on-demand PRSs transmitted across the multiple positioning frequency layers use a same reference point A; and
the target on-demand PRSs across the multiple positioning frequency layers comprises a same transmission and reception point TRP and/or a same number of TRPs.

31. The on-demand PRS-based request method according to claim 30, before the sending, by a first network-side device, a second on-demand PRS request across multiple positioning frequency layers, further comprising:
receiving, by the first network-side device, a first on-demand PRS request transmitted by the terminal across multiple positioning frequency layers; wherein the first on-demand PRS request is used to request, from the first network-side device, one or more target on-demand PRSs satisfying a condition for aggregation.

32. The on-demand PRS-based request method according to claim 31, wherein the first on-demand PRS request comprises information about a target positioning frequency layer combination, which is used to indicate that the first on-demand PRS request is used for requesting to send the target on-demand PRSs on the target positioning frequency layer combination, and the target positioning frequency layer combination comprises multiple positioning frequency layers; or
the first on-demand PRS request comprises: aggregation indication information; wherein the aggregation indication information is used for indicating information about multiple positioning frequency layers expected to be aggregated.

33. The on-demand PRS-based request method according to claim 30 or 31, wherein the second on-demand PRS request comprises information about a target positioning frequency layer combination, which is used to indicate that the second on-demand PRS request is used for requesting to send the target on-demand PRS on the target positioning frequency layer combination, and the target positioning frequency layer combination comprises multiple positioning frequency layers; or
the second on-demand PRS request comprises: aggregation indication information; wherein the aggregation indication information is used for indicating information about multiple positioning frequency layers expected to be aggregated.

34. The on-demand PRS-based request method according to claim 32 or 33, wherein the aggregation indication information comprises at least one of the following:
first indication information, wherein the first indication information is used to indicate that a target on-demand PRS satisfying the condition for aggregation is expected to be received;
identifiers IDs of the multiple positioning frequency layers;
frequency domain information of the multiple positioning frequency layers;
number information of the multiple positioning frequency layers;
aggregation bandwidth information of the multiple positioning frequency layers; and
frequency band information to which the multiple positioning frequency layers belong.

35. The on-demand PRS-based request method according to claim 30 to 31, wherein the method further comprises:
sending, by the first network-side device, an on-demand PRS configuration request to the second network-side device across multiple positioning frequency layers, wherein the on-demand PRS configuration request is used to request the second network-side device to configure an on-demand PRS across multiple positioning frequency layers.

36. The on-demand PRS-based request method according to claim 35, wherein the method further comprises:
receiving, by the first network-side device, a configuration response for the target on-demand PRS sent by the second network-side device on the multiple positioning frequency layers.

37. The on-demand PRS-based request method according to claim 30 to 31, wherein the method further comprises:
sending, by the first network-side device, configuration information for a positioning frequency layer combination to the terminal; wherein the configuration information of the positioning frequency layer combination comprises at least one of the following:
identification information of the positioning frequency layer combination;
assistance data of the positioning frequency layer combination; and
assistance data of multiple positioning frequency layers comprised in the positioning frequency layer combination.

38. The on-demand PRS-based request method according to claim 30 to 31, wherein the method further comprises:
sending, by the first network-side device, positioning assistance data to the terminal, where the positioning assistance data comprises positioning frequency layer combination and/or configuration information of positioning frequency layers.

39. The on-demand PRS-based request method according to claim 38, wherein the configuration information for the positioning frequency layer comprises identification information of a positioning frequency layer combination to which the positioning frequency layer belongs.

40. The on-demand PRS-based request method according to claim 30 or 31, wherein multiple positioning frequency layers in a same positioning frequency layer combination satisfy a first condition, and the first condition is that the multiple positioning frequency layers have same first information; wherein the first information comprises at least one of the following: a reference point A, an absolute radio frequency channel number ARFCN, a cell physical layer identifier PCI, and an NR cell global identifier NCGI.

41. The on-demand PRS-based request method according to claim 36, wherein
the assistance data of the positioning frequency layer combination comprises at least one of the following:
third information related to positioning frequency layers comprised in the positioning frequency layer combination; and
assistance data for multiple positioning frequency layers, wherein the assistance data comprises at least one of the following: information about reference positioning frequency layers and a common parameter of each positioning frequency layer combination; wherein
the third information comprises at least one of the following: IDs of the multiple positioning frequency layers, frequency domain information of the multiple positioning frequency layers, fourth information of each positioning frequency layer, number information of the multiple positioning frequency layers, frequency band IDs of the multiple positioning frequency layers, and preference of the multiple positioning frequency layers; and
the fourth information comprises at least one of the following: a reference point A of each positioning frequency layer, a start physical resource block PRB of each positioning frequency layer, and a bandwidth of each positioning frequency layer;
the reference positioning frequency layer is a frequency layer that provides reference fifth information to the multiple positioning frequency layers of the positioning frequency layer combination, and the fifth information comprises at least one of the following: identification information of the reference positioning frequency layer, a comb size CombSize, a cyclic prefix CP, a subcarrier spacing, and a reference point A; and
the common parameter comprises at least one of a comb size, a CP, a subcarrier spacing, a reference point A, continuous or non-continuous carrier aggregation in a frequency band, radio frequency information, antenna information, timing error group TEG information, and transmission and reception point TRP information.

42. The on-demand PRS-based request method according to claim 31, wherein the method further comprises:
sending, by the first network-side device, one or more preconfigured target on-demand PRS configuration information to the terminal, wherein the preconfigured target on-demand PRS configuration information comprises at least one of the following: an identifier ID of the preconfigured target on-demand PRS, information about multiple positioning frequency layers associated with the preconfigured target on-demand PRS, and a preconfigured parameter for the preconfigured target on-demand PRS; wherein
the information about the multiple positioning frequency layers associated with the preconfigured target on-demand PRS comprises at least one of the following: identification information of a positioning frequency layer combination to which the positioning frequency layers belong, and third information related to the multiple positioning frequency layers;
the third information comprises at least one of the following: IDs of the multiple positioning frequency layers, frequency domain information of the multiple positioning frequency layers, fourth information of each positioning frequency layer, number information of the multiple positioning frequency layers, frequency band IDs of the multiple positioning frequency layers, and preference of the multiple positioning frequency layers; and
the fourth information comprises at least one of the following: a reference point A of each positioning frequency layer, a start physical resource block PRB of each positioning frequency layer, and a bandwidth of each positioning frequency layer.

43. The on-demand PRS-based request method according to claim 42, wherein
the first on-demand PRS request carries IDs of one or more preconfigured target on-demand PRSs.

44. The on-demand PRS-based request method according to claim 31, wherein the first on-demand PRS request further comprises at least one of the following:
first indication information of an associated positioning frequency layer combination, wherein the first indication information is used to indicate that a target on-demand PRS satisfying the condition for aggregation is expected to be received;
a start time for transmitting an on-demand PRS for the associated positioning frequency layer combination;
a duration for transmitting an on-demand PRS for the associated positioning frequency layer combination;
a bandwidth for transmitting an on-demand PRS for the associated positioning frequency layer combination;
preferred configuration information for transmitting an on-demand PRS for the associated positioning frequency layer combination; wherein the preferred configuration information comprises at least one of the following: a periodicity of the on-demand PRS, the number of symbols, a comb size, an SCS, and associated quasi-co-location QCL information; and
sixth information related to multiple positioning frequency layers comprised in the associated positioning frequency layer combination, wherein the sixth information comprises at least one of the following: IDs of the multiple positioning frequency layers, frequency domain information of the multiple positioning frequency layers, number information of the multiple positioning frequency layers, frequency band IDs of the multiple positioning frequency layers, and preference of the multiple positioning frequency layers.

45. The on-demand PRS-based request method according to claim 31, wherein the first on-demand PRS request further comprises at least one of the following:
first indication information of associated multiple positioning frequency layers, wherein the first indication information is used to indicate that a target on-demand PRS satisfying the condition for aggregation is expected to be received;
a start time for transmitting an on-demand PRS for the associated multiple positioning frequency layers;
a duration for transmitting an on-demand PRS for the associated multiple positioning frequency layers;
a bandwidth for transmitting an on-demand PRS for the associated multiple positioning frequency layers;
preferred configuration information for transmitting an on-demand PRS for the associated multiple positioning frequency layers; wherein the preferred configuration information comprises at least one of the following: a periodicity of the on-demand PRS, the number of symbols, a comb size, an SCS, and associated quasi-co-location QCL information; and
sixth information related to the associated multiple positioning frequency layers, wherein the sixth information comprises at least one of the following: IDs of the multiple positioning frequency layers, frequency domain information of the multiple positioning frequency layers, number information of the multiple positioning frequency layers, frequency band IDs of the multiple positioning frequency layers, and preference of the multiple positioning frequency layers.

46. The on-demand PRS-based request method according to claim 38 or 39, wherein
the configuration information for the positioning frequency layer comprises identification information of the positioning frequency layer, and the identification information comprises at least one of the following: an ID of the positioning frequency layer, frequency domain information of the positioning frequency layer, a frequency band ID of the positioning frequency layer, and preference of the positioning frequency layer.

47. An on-demand PRS-based request method, comprising:
receiving, by a second network-side device, a second on-demand PRS request sent by a first network-side device across multiple positioning frequency layers; wherein the second on-demand PRS request is used to request, from a second network-side device, one or more target on-demand PRSs satisfying a condition for aggregation; and
the satisfying a condition for aggregation comprises at least one of the following:
the target on-demand PRSs transmitted across the multiple positioning frequency layers have a same time-domain position;
the target on-demand PRSs transmitted across the multiple positioning frequency layers have a same subcarrier spacing SCS;
the target on-demand PRSs transmitted across the multiple positioning frequency layers have a same comb size;
the target on-demand PRSs transmitted across the multiple positioning frequency layers use a same cyclic prefix CP type;
the target on-demand PRSs transmitted across the multiple positioning frequency layers use a same reference point A; and
the target on-demand PRSs across the multiple positioning frequency layers comprises a same transmission and reception point TRP and/or a same number of TRPs.

48. An on-demand PRS-based request apparatus, comprising:
a sending module, configured to send a first on-demand PRS request across multiple positioning frequency layers; wherein the first on-demand PRS request is used to request, from a first network-side device, one or more target on-demand PRSs satisfying a condition for aggregation; and
the satisfying a condition for aggregation comprises at least one of the following:
the target on-demand PRSs transmitted across the multiple positioning frequency layers have a same time-domain position;
the target on-demand PRSs transmitted across the multiple positioning frequency layers have a same subcarrier spacing SCS;
the target on-demand PRSs transmitted across the multiple positioning frequency layers have a same comb size;
the target on-demand PRSs transmitted across the multiple positioning frequency layers use a same cyclic prefix CP type;
the target on-demand PRSs transmitted across the multiple positioning frequency layers use a same reference point A; and
the target on-demand PRSs across the multiple positioning frequency layers comprises a same transmission and reception point TRP and/or a same number of TRPs.

49. An on-demand PRS-based request apparatus, comprising:
a sending module, configured to send a second on-demand PRS request across multiple positioning frequency layers; wherein the second on-demand PRS request is used to request, from a second network-side device, one or more target on-demand PRSs satisfying a condition for aggregation; and
the satisfying a condition for aggregation comprises at least one of the following:
the target on-demand PRSs transmitted across the multiple positioning frequency layers have a same time-domain position;
the target on-demand PRSs transmitted across the multiple positioning frequency layers have a same subcarrier spacing SCS;
the target on-demand PRSs transmitted across the multiple positioning frequency layers have a same comb size;
the target on-demand PRSs transmitted across the multiple positioning frequency layers use a same cyclic prefix CP type;
the target on-demand PRSs transmitted across the multiple positioning frequency layers use a same reference point A; and
the target on-demand PRSs across the multiple positioning frequency layers comprises a same transmission and reception point TRP and/or a same number of TRPs.

50. An on-demand PRS-based request apparatus, comprising:
a receiving module, configured to receive a second on-demand PRS request sent by a first network-side device across multiple positioning frequency layers; wherein the second on-demand PRS request is used to request, from a second network-side device, one or more target on-demand PRSs satisfying a condition for aggregation; and
the satisfying a condition for aggregation comprises at least one of the following:
the target on-demand PRSs transmitted across the multiple positioning frequency layers have a same time-domain position;
the target on-demand PRSs transmitted across the multiple positioning frequency layers have a same subcarrier spacing SCS;
the target on-demand PRSs transmitted across the multiple positioning frequency layers have a same comb size;
the target on-demand PRSs transmitted across the multiple positioning frequency layers use a same cyclic prefix CP type;
the target on-demand PRSs transmitted across the multiple positioning frequency layers use a same reference point A; and
the target on-demand PRSs across the multiple positioning frequency layers comprises a same transmission and reception point TRP and/or a same number of TRPs.

51. A terminal, comprising a processor and a memory, wherein the memory stores a program or instructions capable of running on the processor, and when the program or instructions are executed by the processor, the steps of the on-demand PRS-based request method according to any one of claims 1 to 29 are implemented.

52. A first network-side device, comprising a processor and a memory, wherein the memory stores a program or instructions capable of running on the processor, and when the program or instructions are executed by the processor, the steps of the on-demand PRS-based request method according to any one of claims 30 to 46 are implemented.

53. A second network-side device, comprising a processor and a memory, wherein the memory stores a program or instructions capable of running on the processor, and when the program or instructions are executed by the processor, the steps of the on-demand PRS-based request method according to claim 47 are implemented.

54. A readable storage medium, wherein the readable storage medium stores a program or instructions, and when the program or instructions are executed by a processor, the steps of the on-demand PRS-based request method according to any one of claims 1 to 29 are implemented, the steps of the on-demand PRS-based request method according to any one of claims 30 to 46 are implemented, or the steps of the on-demand PRS-based request method according to claim 47 are implemented.
